(19) **Europäisches Patentamt / European Patent Office / Office européen des brevets**

(11) **EP 3 615 578 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**15.11.2023 Patentblatt 2023/46**

(45) Hinweis auf die Patenterteilung:
**10.03.2021 Patentblatt 2021/10**

(21) Anmeldenummer: **18717637.5**

(22) Anmeldetag: **23.04.2018**

(51) Internationale Patentklassifikation (IPC):
**C08F 6/22** (2006.01)   **C08F 279/04** (2006.01)
**C08L 25/12** (2006.01)   **C08L 55/02** (2006.01)
**C08L 69/00** (2006.01)

(52) Gemeinsame Patentklassifikation (CPC):
(C-Sets verfügbar)
**C08F 279/04; C08F 6/22; C08L 25/12; C08L 69/00**

(Forts.)

(86) Internationale Anmeldenummer:
**PCT/EP2018/060268**

(87) Internationale Veröffentlichungsnummer:
**WO 2018/197377 (01.11.2018 Gazette 2018/44)**

(54) **VERBESSERTES VERFAHREN ZUR HERSTELLUNG VON ABS-PFROPFCOPOLYMEREN**

IMPROVED PROCESS FOR PRODUCING ABS GRAFT COPOLYMERS

PROCÉDÉ AMÉLIORÉ DE PRODUCTION DE COPOLYMÈRES GREFFÉS D'ABS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2017 EP 17167771**

(43) Veröffentlichungstag der Anmeldung:
**04.03.2020 Patentblatt 2020/10**

(73) Patentinhaber: **INEOS Styrolution Group GmbH**
**60325 Frankfurt am Main (DE)**

(72) Erfinder:
 • **MICHELS, Gisbert**
  **51375 Leverkusen (DE)**
 • **JANSEN, Ulrich**
  **41541 Dormagen (DE)**
 • **KAMINSKY, Stefan**
  **67435 Neustadt an der Weinstrasse (DE)**
 • **WITTENBERG, Nils**
  **65719 Hofheim am Taunus (DE)**
 • **RÜTER, Fabian**
  **41470 Neuss (DE)**

(74) Vertreter: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**

(56) Entgegenhaltungen:
**WO-A1-2014/170406       DE-A1- 4 015 296**
**DE-A1-102006 044 270     GB-A- 133 535**
**JP-B2- 3 390 625**

EP 3 615 578 B2

(52) Gemeinsame Patentklassifikation (CPC): (Forts.)

C-Sets
**C08F 6/22, C08L 25/12;**
**C08F 6/22, C08L 55/02;**
**C08L 25/12, C08L 55/02, C08L 83/04;**
**C08L 69/00, C08L 25/12, C08L 55/02**

**Beschreibung**

Die Erfindung betrifft ein Verfahren zur Herstellung von Pfropfcopolymeren auf Basis von Acrylnitril-Butadien-Styrol-Copolymeren (ABS), bei dem die Pfropfcopolymere nach der Herstellung und Fällung besonders gut entwässert werden können und dann eine niedrige Restfeuchte nach der Zentrifugation aufweisen. Die Erfindung betrifft zudem ein Verfahren zur Herstellung von thermoplastischen Formmassen unter Verwendung der so erhaltenen ABS-Pfropfcopolymere.

Acrylnitril-Butadien-Styrol-Copolymere (ABS) und Acrylnitril-Butadien-Methylstyrol-Copolymere werden seit vielen Jahren in großen Mengen als thermoplastische Formmassen für die Herstellung von Formteilen aller Art eingesetzt. Es ist bekannt, die Schlagzähigkeit von Styrol-Acrylnitril-Copolymeren (SAN) oder Methylstyrol-Acrylnitril-Copolymeren (AMSAN) durch Einarbeiten von Pfropfkautschuk, beispielsweise gepfropften Polybutadien-Kautschuken, zu verbessern. Grundsätzlich kann die Herstellung von solchen schlagzäh-modifizierten SAN-Formmassen durch Pfropfpolymerisation von Styrol und Acrylnitril in Gegenwart eines Polybutadien-Kautschuks und/oder durch nachträgliches Abmischen eines Pfropfcopolymers mit einer separat hergestellten polymeren SAN-Matrix erfolgen. Dabei kann das Eigenschaftsspektrum der Formmassen und der daraus hergestellten Formteile in weiten Bereichen variiert werden. Beispielsweise beschreibt das Dokument WO 2014/170406 thermoplastische Formmassen umfassend eine SAN-Polymermatrix und ein Pfropfcopolymer aufgebaut aus einer agglomerierten Kautschuk-Pfropfgrundlage und einer SAN-Pfropfhülle.

ABS-Formmassen zeichnen sich insbesondere durch ihre vorteilhaften mechanischen Eigenschaften, wie hohe Zähigkeit (Schlagzähigkeit, Kerbschlagzähigkeit), hohe Elastizität (E-Modul), gute Verarbeitbarkeit (thermoplastische Fließfähigkeit, MVR) und hohe Wärmeformbeständigkeit, aus und weisen zudem oftmals gute Oberflächeneigenschaften, wie Glanz, Glätte, Homogenität, gleichmäßiges Aussehen, auf.

ABS-Pfropfcopolymere werden meist durch Emulsionspolymerisation hergestellt, die SAN-Matrix wird oftmals durch Masse- bzw. Lösungspolymerisation hergestellt. Die Herstellung der ABS-Pfropfcopolymere erfolgt in der Regel ausgehend von einem oder mehreren Polybutadien-Latices durch Pfropfcopolymerisation von Styrol und/oder Acrylnitril. Oftmals ist es üblich, die mittlere Teilchengröße des Polybutadien-Latex (ausgehend von einem Polybutadien-Saatlatex) vor der Pfropfpolymerisation durch Agglomeration gezielt einzustellen, da die Größe der Latexpartikel einen wesentlichen Einfluss auf die physikalischen Eigenschaften der späteren thermoplastischen Formmassen hat.

Diese Agglomeration kann beispielsweise durch die Umsetzung des Polybutadien-Latex mit einer Salzlösung oder einer Salz/Säurelösung oder speziellen agglomerierend wirkenden Copolymere erfolgen (z.B. WO 2014/170407, EP-A 0 022 200).

Die Pfropfcopolymere, die zunächst in Latexform erhalten werden, werden typischerweise durch Salz- und/oder Säurelösungen ausgefällt und von der wässrigen Lösung (auch Serum oder Mutterlauge genannt) abgetrennt. Dies kann in der Regel durch Filtration oder Zentrifugation erfolgen. Das abgetrennte Serum wird häufig in den Fällungsprozess zurückgeführt. Die gefällten Latices mit einer Restfeuchte von etwa 15 bis 40 Gew.-% werden typischerweise in einem nachgeschalteten Trocknungsschritt, z.B. in einem Fließbetttrockner oder Stromtrockner, auf eine Restfeuchte von kleiner 2 Gew.-% getrocknet. Danach werden die getrockneten Pfropfcopolymere mit Styrol-Acrylnitril-Copolymeren in Extrudern oder Schneckenmaschinen compoundiert, extrudiert und schließlich in Granulat-Form erhalten. Es ist oftmals üblich, das Pfropfcopolymer nach der Pfropfpolymerisation und Ausfällung in einem oder mehreren Schritten zu waschen, um Salze und andere Verunreinigungen im Produkt zu vermindern.

Aus wirtschaftlichen Gründen und zur Einsparung von Trocknungsenergie aber auch um mitgeführte Verunreinigungen, wie Salze, zu vermindern, ist es wünschenswert gefällte Latices mit einer gute Entwässerbarkeit und damit Polymerprodukte (Filterkuchen) mit möglichst niedriger Restfeuchte zu erhalten.

In EP-A 0 734 825 wird die Entwässerung und Trocknung eines ABS-Pfropfcopolymers in einem Extruder beschrieben.

DE-A 656 780 beschreibt ein Verfahren zur Koagulation von Kautschuklatices, wobei geringe Mengen anorganischen oder organischen Säuren unter Rühren in einem ersten Fällbehälter bei einem pH von 2-4 mit den Kautschuklatices vermischt werden und die Kunststoffsuspension in mindestens einem weiteren Behälter gealtert wird. Dieses Verfahren führt jedoch bei der Aufarbeitung von ABS-Pfropfkautschukpolymeren zu sehr feinen Pulversuspensionen mit schlechter Filtrierbarkeit und hoher Restfeuchte im Pulverfeuchtgut.

DE-A 4 0152 96 beschreibt ein kontinuierliches Verfahren zur Aufarbeitung von Vinylpolymer-Latices mit Rückführung des Serums aus der mechanischen Entwässerung (z.B. Zentrifugation) in die Mischstufe aus Fällungslösung und Latex, um eingesetzte Hilfsstoffe (Salz und Säure) rückzugewinnen und die Abwassermenge zu reduzieren. Es werden Produkte mit vergleichsweise hoher Restfeuchte erhalten.

US 8,299,175 beschreibt einen Herstellungsprozess für ABS, bei dem der Pfropfkautschuklatex zunächst bei 60 bis 80°C gefällt und dann bei 80 bis 99°C gealtert wird.

In den DE-A 10 2006 044 270 und DE-A 2 909 518 werden Verfahren zur Aufarbeitung von Pfropfpolymer-Latices beschrieben. Bei diesen Verfahren ist es jedoch nachteilig, dass die Restfeuchten der wasserfeuchten Pfropfkautschukpolymere nach Abtrennung der wässrigen Lösung vergleichsweise hoch sind.

Die Entwässerung und Trocknung des Pfropfcopolymers erfordern in der Regel einen hohen Energieaufwand und einen hohen apparativen Aufwand. Es besteht somit ein Bedarf, ein einfaches und kostengünstiges Herstellungsverfahren für ABS-Pfropfcopolymere bereitzustellen, wobei die Pfropfcopolymere mit einem geringen Trocknungsaufwand einfach und kostengünstig erhalten werden können, beispielsweise in Form eines getrockneten Pulvers. Zudem sollten die thermoplastischen Formmassen, die mit Hilfe der Pfropfcopolymere hergestellt werden, gute mechanische Eigenschaften sowie eine gute Oberflächenqualität aufweisen.

Eine Aufgabe der Erfindung bestand demnach darin, ein Verfahren zur Herstellung eines ABS-Pfropfcopolymers bereitzustellen, bei dem die Restfeuchte des Filterkuchens, d.h. der wasserfeuchten ABS-Pfropfcopolymere, nach der Zentrifugation im Vergleich zu Verfahren des Standes der Technik verringert ist.

Es wurde überraschend gefunden, dass ABS-Pfropfcopolymere mit besonders vorteilhaftem Entwässerungsverhalten erhalten werden, wenn zunächst eine Vermischung von Pfropfcopolymer-Latex und Fällungslösung in einem ersten relativ kleinen Fällungsbehälter bei einer kurzen Verweilzeit erfolgt, und die Fällung dann in weiteren größeren Behältern bei längerer Verweilzeit fortgeführt wird. Insbesondere entspricht das Volumen des ersten Fällungsbehälters maximal 30 % des Volumens der nachfolgenden Fällungsbehälter. Als besonders vorteilhaft hat es sich erwiesen, wenn Pfropfcopolymer-Latex und Fällungslösung zunächst in einem Strömungsrohr vermischt werden. Zudem wurde gefunden, dass Temperaturen im ersten Fällungsbehälter im Bereich von 30 bis 80 °C, bevorzugt 35 bis 75 °C, und eine hierzu höhere Temperatur im zweiten Fällungsbehälter, z.B. im Bereich von 60 bis 130 °C, bevorzugt 82 bis 98 °C, zu Pfropfcopolymer-Dispersionen mit deutlich verbesserten Entwässerungseigenschaften führen.

Gegenstand der Erfindung ist ein Verfahren zur Herstellung einer Pfropfcopolymer-Zusammensetzung enthaltend:

B: 90 bis 100 Gew.-%, bevorzugt 95 bis 100 Gew.-%, besonders bevorzugt 99 bis 100 Gew.-%, oftmals 95 bis 99,9 Gew.-%, mindestens eines Pfropfcopolymers B, enthaltend:

B1: 40 bis 85 Gew.-%, bevorzugt 50 bis 80 Gew.-%, besonders bevorzugt 55 bis 70 Gew.-%, bezogen auf das Pfropfcopolymer B, mindestens einer Pfropfgrundlage B1, welche erhalten wird durch Emulsionspolymerisation von:

B11: 50 bis 100 Gew.-%, bevorzugt 80 bis 100 Gew.-%, besonders bevorzugt 90 bis 100 Gew.-%, bezogen auf die Pfropfgrundlage B1, Butadien,

B12: 0 bis 50 Gew.-%, bevorzugt 0 bis 20 Gew.-%, besonders bevorzugt 0 bis 10 Gew.-%, bezogen auf die Pfropfgrundlage B1, mindestens eines weiteren Monomers B12 ausgewählt aus Styrol, $\alpha$-Methylstyrol, Acrylnitril, Methacrylnitril, Isopren, Chloropren, $C_1$-$C_4$-Alkylstyrol, $C_1$-$C_8$-Alkyl(meth)acrylat, Alkylenglykol-di(meth)acrylat und Divinylbenzol;

wobei die Summe B11 + B12 gerade 100 Gew.-% ergibt; und

B2: 15 bis 60 Gew.-%, bevorzugt 20 bis 50 Gew.-%, besonders bevorzugt 30 bis 45 Gew.-%, bezogen auf das Pfropfcopolymer B, einer Pfropfhülle B2, welche erhalten wird durch Emulsionspolymerisation in Gegenwart der mindestens einen Pfropfgrundlage B1 von:

B21 50 bis 95 Gew.-%, bevorzugt 65 bis 80 Gew.-%, besonders bevorzugt 75 bis 80 Gew.-%, bezogen auf die Pfropfhülle B2, eines Monomers B21, ausgewählt aus Styrol oder Mischungen von Styrol und mindestens einem weiteren Monomer ausgewählt aus $\alpha$-Methylstyrol, p-Methylstyrol und (Meth)acrylsäure-$C_1$-$C_8$-alkylester (z. B. Methylmethacrylat, Ethylmethacrylat, n-Butylacrylat, tert-Butylacrylat);
B22 5 bis 50 Gew.-%, bevorzugt 20 bis 35 Gew.-%, besonders bevorzugt 20 bis 25 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid);

wobei die Gesamtsumme aus Pfropfgrundlage B1 und Pfropfhülle B2 gerade 100 Gew.-% ergibt; und

K1: 0 bis 10 Gew.-%, bevorzugt 0 bis 5 Gew.-%, besonders bevorzugt 0 bis 1 Gew.-%, oftmals 0,1 bis 5 Gew.-% mindestens einer weiteren Komponente K1,

umfassend die Schritte:

a) Herstellung des Pfropfcopolymers B umfassend die Emulsionspolymerisation der Pfropfhülle B2 in Gegenwart der mindestens einen Pfropfgrundlage B1, wobei das Pfropfcopolymer B in Form eines Latex L erhalten wird;

b) Fällen des Latex L des mindestens einen Pfropfcopolymers B nach der Emulsionspolymerisation, bevorzugt in einem kontinuierlichen Verfahrensschritt, durch Zugabe mindestens einer Fällungslösung F, enthaltend mindestens ein Salz und/oder mindestens eine Säure, wobei ein Teil des Latex L1 und eine Fällungslösung F1 in einem ersten Behälter H1 bei einer Temperatur $T_1$ im Bereich von 30 bis 80 °C, bevorzugt 35 bis 75 °C, besonders bevorzugt 40 bis 70 °C, insbesondere bevorzugt 40 bis 60 °C, vermischt werden, und die Mischung aus Latex L1 und Fällungslösung F1 in mindestens zwei weitere Behältern H2 und H3 mit Temperaturen $T_2$ und $T_3$ im Bereich von 60 bis 130 °C, bevorzugt 82 bis 98 °C, besonders bevorzugt von 60 bis 90 °C, geführt wird, wobei optional weitere Teile des Latex L2 und/oder L3 und optional weitere Fällungslösungen F2 und/oder F3 zugegeben werden, wobei das Volumen $V_1$ des ersten Behälters H1 kleiner oder gleich 30 %, bevorzugt kleiner oder gleich 10 %, besonders bevorzugt kleiner oder gleich 5 %, des Volumens $V_2$ des zweiten Behälters H2 ist; wobei das Vermischen des Latex L1 und der Fällungslösung F1 im ersten Behälter H1 durch den Fluss der beiden Ströme L1 und F1 erfolgt, und wobei der erste Behälter H1 ein Strömungsrohr darstellt;

c) mechanisches Entwässern des gefällten Pfropfcopolymers B aus Schritt b), bevorzugt mittels Zentrifugation und/oder Filtration, wobei ein abgetrenntes Serum S und ein Pfropfcopolymer B erhalten werden, wobei das Pfropfcopolymer B eine Restfeuchte von kleiner oder gleich 25 Gew.-% aufweist;

d) optional Trocknen des entwässerten Pfropfcopolymers B aus Schritt c).

In einer bevorzugten Ausführungsform wird die ABS-Pfropfcopolymer-Zusammensetzung in Form eines Pulvers erhalten, d.h. das entwässerte Pfropfcopolymers B aus Schritt c) wird ohne Zugabe von weiteren polymeren Komponenten getrocknet. In dieser bevorzugten Ausführungsform umfasst Schritt d) des Verfahrens das Trocknen des entwässerten Pfropfcopolymers B aus Schritt c), wobei ein Pfropfcopolymer-Pulver erhalten wird, das eine Restfeuchte von kleiner oder gleich 5 Gew.-% aufweist.

Es ist weiterhin möglich, das entwässerte Pfropfcopolymer B aus Schritt c) mit einem thermoplastischen Copolymer A in der Schmelze zu vermischen und gemeinsam in einem Extruder oder einer Compoundierungs-Vorrichtung zu trocknen.

Schritt a) sowie Komponenten B und K1

Das mindestens eine Pfropfcopolymer B wird hergestellt aus (bzw. besteht aus):

40 bis 85 Gew.-%, bevorzugt 50 bis 80 Gew.-%, besonders bevorzugt 55 bis 70 Gew.-%, bezogen auf das Pfropfcopolymer B, mindestens einer Pfropfgrundlage B1, bevorzugt ein Polybutadien-Latex,

und 15 bis 60 Gew.-%, bevorzugt 20 bis 50 Gew.-%, besonders bevorzugt 30 bis 45 Gew.-%, bezogen auf das Pfropfcopolymer B, einer Pfropfhülle B2, welche erhalten wird durch Emulsionspolymerisation der Monomere B21, bevorzugt Styrol und/oder $\alpha$-Methylstyrol, und B22, bevorzugt Acrylnitril, in Gegenwart der mindestens einen Pfropfgrundlage B1,

wobei die Summe aus Pfropfgrundlage B1 und Pfropfhülle B2 gerade 100 Gew.-% ergibt.

In einer bevorzugten Ausführungsform wird die mindestens eine Pfropfgrundlage B1 erhalten durch Emulsionspolymerisation von:

B11: 50 bis 100 Gew.-%, bevorzugt 80 bis 100 Gew.-%, bezogen auf die Pfropfgrundlage B1, Butadien,

B12: 0 bis 50 Gew.-%, bevorzugt 0 bis 20 Gew.-%, besonders bevorzugt 0 bis 10 Gew.-%, bezogen auf die Pfropfgrundlage B1, mindestens eines weiteren Monomers B12 ausgewählt aus Styrol und Acrylnitril;

wobei die Summe B11 + B12 gerade 100 Gew.-% ergibt.

In einer bevorzugten Ausführungsform handelt es sich bei der Pfropfgrundlage B1 um einen reinen Polybutadien-Latex. In einer weiteren bevorzugten Ausführungsform wird die mindestens eine Pfropfgrundlage B1 erhalten durch Emulsionspolymerisation von:

B11: 50 bis 99 Gew.-%, bevorzugt 80 bis 95 Gew.-%, bezogen auf die Pfropfgrundlage B1, Butadien,

B12: 1 bis 50 Gew.-%, bevorzugt 5 bis 20 Gew.-%, besonders bevorzugt 5 bis 10 Gew.-%, bezogen auf die Pfropfgrundlage B1, mindestens eines weiteren Monomers B12 ausgewählt aus Styrol und Acrylnitril;

wobei die Summe B11 + B12 gerade 100 Gew.-% ergibt.

Bevorzugt handelt es sich bei dem Monomer B21 um Styrol oder Mischungen von Styrol und mindestens einem weiteren Monomer ausgewählt aus $\alpha$-Methylstyrol, Methyl-methacrylat, Ethylmethacrylat, n-Butylacrylat und tert-Butylacrylat, besonders bevorzugt um Styrol oder Mischungen von Styrol und mindestens einem weiteren Monomer ausge-wählt aus $\alpha$-Methylstyrol und Methylmethacrylat.

Bevorzugt handelt es sich bei dem Monomer B22 um Acrylnitril oder Mischungen von Acrylnitril und mindestens einem weiteren Monomer ausgewählt aus Methacrylnitril, Maleinsäureanhydrid, N-Cyclohexylmaleimid und N-Phenylmaleimid, besonders bevorzugt um Acrylnitril oder Mischungen von Acrylnitril und mindestens einem weiteren Monomer ausgewählt aus Methacrylnitril und Maleinsäureanhydrid.

In einer besonders bevorzugten Ausführungsform handelt sich bei dem Monomer B21 um Styrol und bei dem Monomer B22 um Acrylnitril.

Die bei der Emulsionspfropf-Polymerisation des Pfropfcopolymers B eingesetzten Monomeren sind vorzugsweise Mischungen aus Styrol und Acrylnitril im Gewichtsverhältnis 95 : 5 bis 50 : 50, besonders bevorzugt im Gewichtsverhältnis 80 : 20 bis 65 : 35.

In einer bevorzugten Ausführungsform weist die Pfropfgrundlage B1 einen mittleren Teilchendurchmesser $D_{50}$ im Bereich von 100 bis 1.000 nm auf.

In einer bevorzugten Ausführungsform weist die Pfropfgrundlage B1 einen Gelgehalt im Bereich von 30 bis 95 Gew.-% auf.

Typischerweise wird der mittleren Teilchendurchmesser $D_{50}$ durch Ultrazentrifugenmessung ermittelt, wie beispielsweise in W. Scholtan, H. Lange (Kolloid Z. u. Z. Polymere 250, S. 782 bis 796 (1972)) beschrieben. Die angegebenen Werte für den Gelgehalt beziehen sich auf die Bestimmung nach der Drahtkäfigmethode in Toluol, wie beispielsweise in Houben-Weyl (Methoden der Organischen Chemie, Makromolekulare Stoffe, Teil 1, S. 307 (1961), Thieme Verlag Stuttgart) beschrieben.

Typischerweise können die Gelgehalte der mindestens einen Pfropfgrundlage B1 (Polybutadien-Latices), insbesondere der unterschiedlichen Pfropfgrundlagen B1-A, B1-B, B1-C und B1-D, wie unten beschrieben, in prinzipiell bekannter Weise durch Anwendung geeigneter Reaktionsbedingungen eingestellt werden. Üblicherweise führen beispielsweise eine hohe Reaktionstemperatur und/oder die Führung der Polymerisation bis zu hohem Umsatz sowie gegebenenfalls der Zusatz von vernetzend wirkenden Substanzen zur Erzielung eines hohen Gelgehaltes. Üblicherweise führen beispielsweise niedrige Reaktionstemperatur und/oder der Abbruch der Polymerisation vor Eintreten einer zu starken Vernetzung sowie gegebenenfalls der Zusatz von Molekulargewichtsreglern (wie beispielsweise n-Dodecylmercaptan oder tert-Dodecylmercaptan) zur Erzielung eines niedrigen Gelgehaltes.

Bevorzugt wird die mindestens eine Pfropfgrundlage B1, insbesondere die unterschiedlichen Pfropfgrundlagen B1-A, B1-B, B1-C und B1-D wie unten beschrieben, durch Emulsionspolymerisation von Butadien als Monomer B11 nach der so genannten Saatpolymerisationstechnik hergestellt. Hierbei wird typischerweise zunächst ein feinteiliger Latex, vorzugsweise ein Polybutadien-Latex, als Saatlatex hergestellt und dann durch Zugabe von weiteren Monomeren, enthaltend oder bestehend aus Butadien, zu größeren Latex-Teilchen weiterpolymerisiert. Dies ist beispielsweise in Houben-Weyl, Methoden der Organischen Chemie, Makromolekulare Stoffe Teil 1, S. 339 (1961), Thieme Verlag Stuttgart, beschrieben. Dabei kann vorzugsweise nach einem Saat-Batch-Verfahren oder nach einem Saat-Zulauf-Verfahren gearbeitet werden.

Als Saatlatices werden vorzugsweise Butadien-Polymere, wie z. B. Polybutadien, Butadien/Styrol-Copolymere oder Butadien/Acrylnitril-Copolymere eingesetzt. Im Prinzip können auch andere feinteilige Latices enthaltend oder bestehend aus den Monomeren B12 verwendet werden, beispielsweise können Saatlatices aus Polystyrol, Styrol-Copolymeren, Polymethylmethacrylat oder Methylmethacrylatcopolymere verwendet werden. Bevorzugte werden reine Polybutadien-Latices als Saatlatices bei der Herstellung der Pfropfgrundlage B1, insbesondere bei der Herstellung der Pfropfgrundlagen B1-A, B1-B, B1-C und B1-D, eingesetzt.

In einer bevorzugten Ausführungsform umfasst das erfindungsgemäße Verfahren die Herstellung von mindestens zwei verschiedenen Pfropfcopolymeren B ausgehend von mindestens zwei verschiedenen Pfropfgrundlagen B1, wobei sich die Pfropfgrundlagen B1 durch ihren mittleren Teilchendurchmesser $D_{50}$ unterscheiden. Bevorzugt werden eine oder mehrere der im Folgenden beschriebenen Pfropfgrundlagen B1-A, B1-B, B1-C und B1-D eingesetzt.

Bevorzugt wird ein Pfropfcopolymer B-I als Pfropfcopolymer B eingesetzt, wobei Pfropfcopolymer B-I erhalten wird durch Emulsionspolymerisation einer Mischung der Monomere B21 und B22 in Gegenwart einer Pfropfgrundlage B1-A, welche einen mittleren Teilchendurchmesser $D_{50}$ im Bereich von 230 bis 330 nm, bevorzugt von 240 bis 320 nm, besonders bevorzugt von 250 bis 310 nm, aufweist, und einer Pfropfgrundlage B1-B, welche einen mittleren Teilchen-durchmesser $D_{50}$ im Bereich von 340 bis 480 nm, bevorzugt von 350 bis 470 nm, besonders bevorzugt von 360 bis 460 nm, aufweist.

In einer bevorzugten Ausführungsform wird eine Mischung aus zwei oder mehreren Pfropfcopolymeren B-I als Pfropfcopolymer B eingesetzt, wobei sich die Pfropfcopolymere B-I durch die Art des Initiators bei der Herstellung der Pfropfhülle B2 und/oder den Anteil der Monomere B21 und B22 der Pfropfhülle unterscheiden.

Bevorzugt wird eine Mischung aus den Pfropfcopolymeren B-I-a und B-I-b als Pfropfcopolymer B eingesetzt, wobei Pfropfcopolymer B-I-a eine Pfropfhülle B2 enthält, welche erhalten wird durch Emulsionspolymerisation der Monomere B21 und B22 in Gegenwart der mindestens einen Pfropfgrundlage B1, insbesondere der Pfropfgrundlagen B1-A und B1-B, unter Verwendung mindestens einer organischen und/oder anorganischen Peroxid-Verbindung als Initiator, bevorzugt unter Verwendung eines anorganisches Peroxid-Salzes, insbesondere eines anorganisches Peroxodisulfat-Salzes, beispielsweise Natriumperoxodisulfat und/oder Kaliumperoxodisulfat, als Initiator; und wobei das Pfropfcopolymer B-I-b eine Pfropfhülle B2 enthält, welche erhalten wird durch Emulsionspolymerisation der Monomere B21 und B22 in Gegenwart der mindestens einen Pfropfgrundlage B1, insbesondere der Pfropfgrundlagen B1-A und B1-B, unter Verwendung eines Redox-Initators, umfassend mindestens ein organisches Hydroperoxid; mindestens ein Reduktionsmittel ausgewählt aus Glucose, Saccharose, Ascorbinsäure und Natriumascorbat sowie optional Übergangsmetallsalze, z.B. Eisen-II-Sulfat, besonders bevorzugt unter Verwendung eines Redox-Initiators bestehend aus mindestens einem organischen Hydroperoxid ausgewählt aus Cumolhydroperoxid, tert-Butylhydroperoxid und p-Menthanhydroperoxid und mindestens einem Reduktionsmittel ausgewählt aus Glucose, Saccharose, Ascorbinsäure und Natriumascorbat.

In einer weiteren bevorzugten Ausführungsform stellt das Pfropfcopolymer B eine Mischung aus mindestens zwei, bevorzugt genau zwei, Pfropfcopolymeren B-I und B-II dar, wobei Pfropfcopolymer B-I erhalten wird wie oben beschrieben, und Pfropfcopolymer B-II erhalten wird durch Emulsionspolymerisation einer Mischung der Monomere B21 und B22 in Gegenwart einer Pfropfgrundlage B1-C, welche einen mittleren Teilchendurchmesser $D_{50}$ im Bereich von 10 bis 220 nm, bevorzugt von 20 bis 210 nm, besonders bevorzugt von 30 bis 200 nm, aufweist.

Bevorzugt werden die Pfropfgrundlagen B1-A, B1-B, B1-C und/oder B1-D, bevorzugt die Pfropfgrundlagen B1-A und B1-B, unter Verwendung eines Saatlatex mit einem mittleren Teilchendurchmesser $D_{50}$ im Bereich von 10 bis 220 nm, vorzugsweise 20 bis 210 nm und besonders bevorzugt 30 bis 200 nm hergestellt. Bei Verwendung von Saatlatices mit mittleren Teilchendurchmessern $D_{50}$ oberhalb 80 nm, vorzugsweise oberhalb 90 nm und besonders bevorzugt oberhalb 100 nm, werden auch die Saatlatices selbst vorzugsweise durch Saatpolymerisation hergestellt. Dazu werden vorzugsweise Saatlatices (B1-D) mit einem mittleren Teilchendurchmesser $D_{50}$ im Bereich von 10 bis 60 nm, vorzugsweise 20 bis 50 nm, eingesetzt. Bevorzugt wird die Pfropfgrundlage B1-C unter Verwendung eines Saatlatex B1-D mit einem mittleren Teilchendurchmesser $D_{50}$ im Bereich von 10 bis 60 nm, vorzugsweise 20 bis 50 nm, hergestellt.

In einer bevorzugten Ausführungsform wird das Pfropfcopolymer B-I durch Emulsionspolymerisation in Gegenwart der Pfropfgrundlagen B1-A und/oder B1-B erhalten, wobei die Pfropfgrundlagen B1-A und/oder B1-B unter Verwendung der Pfropfgrundlage B1-C als Saatlatex hergestellt werden. In einer bevorzugten Ausführungsform wird das Pfropfcopolymer B-II durch Emulsionspolymerisation in Gegenwart der Pfropfgrundlage B1-C erhalten, wobei B1-C als Saatlatex für die Herstellung der Pfropfgrundlagen B1-A und/oder B1-B dient.

Das Gewichtsverhältnis der Feststoffe der Pfropfgrundlagen B1-A und B1-B bei der Emulsionspolymerisation des Pfropfcopolymers B-I kann in weiten Grenzen variiert werden. Typischerweise liegt das Gewichtsverhältnis der Feststoffe von B1-A : B1-B im Bereich von 90 : 10 bis 10 : 90, vorzugsweise von 80 : 20 bis 20 : 80, besonders bevorzugt von 70 : 30 bis 30 : 70 und ganz besonders bevorzugt von 60 : 40 bis 40 : 60. Die Feststoffe der Pfropfgrundlagen B1 (Butadien-Latices) werden typischerweise gravimetrisch durch Trocknung bei 180 °C für 23 Minuten in einem Umluft-Trockenschrank oder mittels einer Trockenwaage ermittelt.

Die Pfropfgrundlage B1-A weist bevorzugt einen mittleren Teilchendurchmesser $D_{50}$ im Bereich von 230 bis 330 nm, vorzugsweise von 240 bis 320 nm und besonders bevorzugt von 250 bis 310 nm, sowie einen Gelgehalt im Bereich von 30 bis 80 Gew.-%, bevorzugt von 40 bis 75 Gew.-% und besonders bevorzugt von 45 bis 70 Gew.-%, auf.

Die Pfropfgrundlage B1-B weist bevorzugt einen mittleren Teilchendurchmesser $D_{50}$ im Bereich von 340 bis 480 nm, bevorzugt von 350 bis 470 nm und besonders bevorzugt von 360 bis 460 nm, sowie einen Gelgehalt im Bereich von 50 bis 95 Gew.-%, bevorzugt von 55 bis 90 Gew.-% und besonders bevorzugt von 60 bis 85 Gew.-%, auf.

Die Pfropfgrundlage B1-C weist bevorzugt einen mittleren Teilchendurchmesser $D_{50}$ im Bereich von 10 bis 220 nm, bevorzugt von 20 bis 210 nm und besonders bevorzugt von 30 bis 200 nm, sowie einen Gelgehalt im Bereich von 30 bis 98 Gew.-%, bevorzugt von 40 bis 95 Gew.-% und besonders bevorzugt von 50 bis 92 Gew.-%, auf.

Der Saatlatex B1-D ist bevorzugt ein reiner Polybutadien-Latex. Bevorzugt weist B1-D einen mittleren Teilchendurchmesser $D_{50}$ im Bereich von 10 bis 60 nm, bevorzugt von 20 bis 50 nm, sowie einen Gelgehalt im Bereich von 10 bis 95 Gew.-%, bevorzugt von 20 bis 90 Gew.-% und besonders bevorzugt von 30 bis 85 Gew.-%.

Zusätzlich können bei der Herstellung der Pfropfgrundlage B1 und/oder bei der Emulsionspolymerisation des mindestens einen Pfropfcopolymers B Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf die gesamte Monomer-Menge bei der Emulsionspolymerisation). Geeignete Molekulargewichtsregler sind beispielsweise Alkylmercaptane, wie n-Dodecylmercaptan, tert-Dodecylmercaptan; dimeres $\alpha$-Methylstyrol und Terpinolen.

Als Initiatoren bei der Herstellung der Pfropfgrundlage B1 und/oder bei der Emulsionspolymerisation des mindestens einen Pfropfcopolymers B können beliebige Initiatoren eingesetzt werden, die bei der gewählten Reaktionstemperatur unter Bildung von Radikalen zerfallen. Typischerweise können Initiatoren eingesetzt werden, die allein thermisch zerfallen oder solche die in Gegenwart eines Redoxsystems zerfallen. Bevorzugt wird mindestens eine organische und/oder anorganische Peroxid-Verbindung (umfassend mindestens eine Peroxidgruppe R-O-O-H und/oder R-O-O-R), z.B. Wasserstoffperoxid, Cumolhydroperoxid, tert-Butylhydroperoxid, p-Menthanhydroperoxid, Ammonium-, Kalium- und Natriumpersulfat, als Initiator verwendet. Insbesondere werden anorganische Peroxid-Salze, wie Peroxodisulfate (Persulfate), Perphosphate und Perborate von Ammonium, Natrium oder Kalium, eingesetzt. Besonders bevorzugt werden als Initiatoren Natrium- und Kaliumpersulfate und/oder organische Hydroperoxide, wie Cumolhydroperoxid und tert-Butylhydroperoxid, eingesetzt.

Im Falle von Redox-Initiatoren werden typischerweise organische Hydroperoxide, Reduktionsmittel sowie optional Übergangsmetallsalze, z.B. Eisen-II-Sulfat, eingesetzt. Als Reduktionsmittel können beispielsweise Glucose, Saccharose, Ascorbinsäure, Natriumascorbat eingesetzt werden.

In einer bevorzugten Ausführungsform wird bei der Emulsionspolymerisation des Pfropfcopolymers B ein anorganisches Peroxid-Salz, insbesondere ein anorganisches Peroxodisulfat-Salz, bevorzugt Natriumperoxodisulfat und/oder Kaliumperoxodisulfat, eingesetzt.

In einer weiteren bevorzugten Ausführungsform wird bei der Emulsionspolymerisation des Pfropfcopolymers B ein Redox-Initiator enthaltend, bevorzugt bestehend aus, tert-Butylhydroperoxid und Natriumascorbat, eingesetzt.

Als Emulgator bei der Herstellung der Pfropfgrundlage B1 und/oder bei der Emulsionspolymerisation zur Herstellung des mindestens einen Pfropfcopolymers B können typischerweise übliche anionische Emulgatoren eingesetzt werden. Bevorzugt werden als Emulgatoren Alkylsulfate, Alkylsulfonate, Aralkylsulfonate, Seifen gesättigter oder ungesättigter Fettsäuren sowie alkalisch disproportionierter oder hydrierter Abietin- oder Tallölsäuren oder Mischungen hiervon verwendet. Vorzugsweise werden Emulgatoren mit Carboxylgruppen (z. B. Salze von $C_{10}$-$C_{18}$-Fettsäuren, disproportionierte Abietinsäure, Emulgatoren gemäß DE-OS 36 39 904 und DE-OS 39 13 509) eingesetzt.

In einer weiteren bevorzugten Ausführungsform können alkalische Seifen von Natrium- und Kaliumsalzen von disproportionierten und/oder dehydrogenierten und/oder hydrierten und/oder partiell hydrierten Harzen (Kolophonium) mit einem Gehalt an Dehydroabietinsäure von mindestens 30 Gew.-% und einem Gehalt von Abietinsäure von maximal 1 Gew.-% als Emulgatoren eingesetzt werden.

Es können weiterhin Salze, Säuren und Basen bei der Emulsionspolymerisation der Pfropfgrundlage B1 als Komponente K1 eingesetzt werden, z.B. Schwefelsäure, Phosphorsäure, Lösungen von Natriumhydroxid, Kaliumhydroxid, Natrium- und Kaliumsalze von Sulfaten und Phosphaten, insbesondere kann Tetranatriumpyrophosphat eingesetzt werden.

Die Polymerisationstemperatur bei der Emulsionspolymerisation des Pfropfcopolymers B beträgt im Allgemeinen 25 bis 160 °C, vorzugsweise 40 bis 90 °C. Geeignete Emulgatoren sind oben angegeben. Dabei kann nach üblicher Temperaturführung, z. B. isotherm, gearbeitet werden. Vorzugsweise wird die Pfropfpolymerisation jedoch so durchgeführt, dass der Temperatur-Unterschied zwischen Beginn und Ende der Reaktion mindestens 10 °C, vorzugsweise mindestens 15 °C und besonders bevorzugt mindestens 20 °C beträgt.

Die Herstellung des Pfropfcopolymers B, insbesondere der Pfropfcopolymere B-I und B-II, erfolgt erfindungsgemäß mittels Emulsionspolymerisation. Dem Fachmann sind gängige Ausführungsformen der Emulsionspolymerisation im Batchbetrieb oder im kontinuierlichen Betrieb bekannt.

Insbesondere werden die Monomere der Pfropfhülle B2, d.h. die Monomere B21 und B22, separat oder als Monomer-Gemisch kontinuierlich zur Pfropfgrundlage B2, in den gegebenen Mengen und Verhältnissen zugegeben und polymerisiert. Dabei werden die Monomere typischerweise in einer für den Fachmann bekannten Weise zur Pfropfgrundlage B1 gegeben.

Bei der Herstellung des Pfropfcopolymers B-I werden die Monomere der Pfropfhülle B2, d.h. die Monomere B21 und B22, separat oder als Monomer-Gemisch kontinuierlich zu einer Mischung der Pfropfgrundlagen B1-A und B1-B zugegeben und polymerisiert.

Bei der Herstellung des Pfropfcopolymers B-II werden die Monomere der Pfropfhülle B2, d.h. die Monomere B21 und B22, separat oder als Monomer-Gemisch kontinuierlich zu der Pfropfgrundlage B1-C zugegeben und polymerisiert.

Zur Erzeugung des Pfropfcopolymers B kann der Monomer-Zulauf während der Emulsionspolymerisation vorzugsweise derart durchgeführt werden, dass innerhalb der ersten Hälfte der gesamten Dosierzeit der Monomere 55 bis 90 Gew.-%, vorzugsweise 60 bis 80 Gew.-% und besonders bevorzugt 65 bis 75 Gew.-%, der gesamten Menge bei der Emulsionspolymerisation eingesetzten Monomeren, insbesondere der Monomere B21 und B22, dosiert werden, wobei der verbleibende Anteil der Monomer innerhalb der zweiten Hälfte der gesamten Dosierzeit dosiert wird.

In einer bevorzugten Ausführungsform kann ein Pfropfcopolymer B-III wie in WO 2012/022710 beschrieben als Pfropfcopolymer B eingesetzt werden.

Die in WO 2012/022710 beschriebenen Pfropfcopolymere werden insbesondere durch Emulsionspolymerisation der Monomere B21 und B22, insbesondere Styrol und Acrylnitril, im Gewichtsverhältnis 95 : 5 bis 50 : 50 in Gegenwart mindestens einer Pfropfgrundlage B1-E (z.B. agglomerierten Polybutadien-Latices A11, A12, A13, A51, A52, A53, A54, A61 und A62 gemäß WO 2012/022710) hergestellt, wobei die Pfropfgrundlage B1-E einen mittleren Teilchendurchmesser $D_{50}$ von 200 bis 800 nm, vorzugsweise von 225 bis 650 nm und besonders bevorzugt von 250 bis 600 nm, aufweist.

Die Pfropfgrundlage B1-E wird typischerweise durch Agglomeration feinteiliger Polybutadien-Saatlatices (z.B. feinteilige Polybutadien-Latices B1 und B6 nach WO 2012/022710) mit Essigsäureanhydrid nach WO 2012/022710 erhalten Die feinteiligen Polybutadien-Saatlatices haben typischerweise einen mittleren Teilchendurchmesser $D_{50}$ von kleiner 110 nm. Sie werden meist durch Emulsionspolymerisation von Butadien hergestellt, wobei bis zu 50 Gew.-% Butadien, basierend auf der Gesamtmenge der Monomeren, durch ein oder mehrere mit Butadien copolymerisierbare Monomeren ersetzt werden können. Beispiele hierfür sind: Isopren, Chloropren, Acrylnitril, Styrol, alpha-Methylstyrol, $C_1$-$C_4$-Alkylstyrole, $C_1$-$C_8$-Alkylacrylate, $C_1$-$C_8$-Alkylmethacrylate. Die Menge an einzusetzendem Essigsäureanhydrid liegt in dieser Ausführungsform bevorzugt bei 0,1 bis 5 Teilen bezogen auf 100 Teile des Feststoffs des feinteiligen Polybutadien-Saatlatex. Der feinteilige Polybutadien-Saatlatex wird bevorzugt mit Essigsäureanhydrid gemischt und, nachdem die Agglomeration vollständig erfolgt ist, mit einer basischen Lösung, bevorzugt einer Lösung von Kaliumhydroxid, stabilisiert. Weitere Details zur Agglomeration können der WO 2012/022710 entnommen werden. Emulgatoren, Initiatoren und Molekulargewichtsregler, Basen, Säuren und Salze können wie oben beschrieben und wie in WO 2012/022710 beschrieben eingesetzt werden.

Der agglomerierte Polybutadien-Saatlatex (Pfropfgrundlage B1-E) wird mit Styrol und Acrylnitril gepfropft, wobei bevorzugt 15 bis 60 Gew.-% eine Mischung aus Styrol und Acrylnitril und ggf. weiteren Monomeren in Gegenwart von 40 bis 85 Gew.-% der Pfropfgrundlage B1-E (gerechnet als Feststoff des Latex) polymerisiert werden.

Bis zu 50 Gew.-% bezogen auf die Summe der in der Pfropfung eingesetzten Monomeren können durch weitere Monomere wie alpha-Methylstryol, Methylmethacrylat, Maleinsäureanhydrid und N-Phenylmaleinimid ersetzt werden. Weitere Details zu Pfropfung der Pfropfgrundlage B1-E können der WO 2012/022710 entnommen werden.

In einer weiteren bevorzugten Ausführungsform (Pfropfcopolymer B-IV) der Erfindung wird das Pfropfcopolymer B erhalten durch Emulsionspolymerisation der Monomere B21 und B22, insbesondere Styrol und Acrylnitril, im Gewichtsverhältnis 95 : 5 bis 50 : 50 in Gegenwart mindestens einer Pfropfgrundlage B1-F, wobei die Pfropfgrundlage B1-F ein Polybutadien-Latex mit einem mittleren Teilchendurchmesser $D_{50}$ von 150 bis 400 nm, vorzugsweise von 150 bis 350 nm und besonders bevorzugt von 150 bis 300 nm, ist, und optional einer weiteren Pfropfgrundlage B1-G, wobei die Pfropfgrundlage B1-G ein Polybutadien-Latex mit einem mittleren Teilchendurchmesser $D_{50}$ von 425 bis 700 nm, vorzugsweise von 450 bis 650 nm und besonders bevorzugt von 450 bis 600 nm, ist, wobei die Polybutadien-Latices B1-F und B1-G durch Agglomeration feinteiliger Polybutadien-Latices mit Essigsäureanhydrid erhalten werden.

In einer bevorzugten Ausführungsform wird ein Pfropfcopolymer B-IV eingesetzt, welche eine Glasübergangstemperatur $T_g$ von <0°C, vorzugsweise < -20°C, besonders bevorzugt < -40°C, aufweist. Die Glasübergangstemperatur $T_g$ wird typischerweise durch dynamisch-mechanische Analyse (DMA) unter Verwendung einer Frequenz von 1 Hz gemessen.

Das bevorzugte Pfropfcopolymer B-IV ist aufgebaut aus

40 bis 85 Gew.-%, vorzugsweise 45 bis 85 Gew.-%, besonders bevorzugt 45 bis 75 Gew.-%, bezogen auf das gesamte Pfropfcopolymer B-IV, mindestens einer Pfropfgrundlage B1-F und optional einer Pfropfgrundlage B1-G, hergestellt aus:

80 bis 98 Gew.-%, vorzugsweise 85 bis 97 Gew.-%, bezogen auf B1-F und B1-G, Butadien (Monomer B11), vorzugsweise 1,3-Butadien, und

2 bis 20 Gew.-%, vorzugsweise 3 bis 15 Gew.-%, bezogen auf B1-F und B1-G, mindestens eines weiteren Monomers B12, bevorzugt Styrol, und

15 bis 60 Gew.-%, vorzugsweise 15 bis 55 Gew.-%, besonders bevorzugt 25 bis 55 Gew.-%, bezogen auf das gesamte Pfropfcopolymer B-IV, mindestens einer Pfropfhülle B2, welche erhalten wird durch Emulsionspolymerisation in Gegenwart der Pfropfgrundlage B1-F und optional B1-G von:

65 bis 80 Gew.-%, insbesondere 65 bis 75 Gew.-%, bezogen auf die Pfropfhülle B2, mindestens eines Monomeren B21, insbesondere Styrol, und
20 bis 35 Gew.-%, insbesondere 25 bis 35 Gew.-%, bezogen auf die Pfropfhülle B2, mindestens eines Monomeren B22, insbesondere Acrylnitril und/oder Methacrylnitril, vorzugsweise Acrylnitril.

Besonders bevorzugt ist das Pfropfcopolymer B-IV aufgebaut aus:

45 bis 85 Gew.-%, besonders bevorzugt 45 bis 75 Gew.-%, bezogen auf das gesamte Pfropfcopolymer B-IV, der Pfropfgrundlagen B1-F und B1-G, hergestellt aus:

80 bis 98 Gew.-%, vorzugsweise 85 bis 97 Gew.-%, bezogen auf B1-F und B1-G, 1,3-Butadien (Monomer B11), und
2 bis 20 Gew.-%, vorzugsweise 3 bis 15 Gew.-%, bezogen auf B1-F und B1-G, Styrol (Monomer B12); und

15 bis 55 Gew.-%, besonders bevorzugt 25 bis 55 Gew.-%, bezogen auf das gesamte Pfropfcopolymer B-IV, mindestens einer Pfropfhülle B2, welche erhalten wird durch Emulsionspolymerisation in Gegenwart der Pfropfgrundlagen B1-F und B1-G von:

65 bis 80 Gew.-%, insbesondere 65 bis 75 Gew.-%, bezogen auf die Pfropfhülle B2, Styrol (Monomer B21) und
20 bis 35 Gew.-%, insbesondere 25 bis 35 Gew.-%, bezogen auf die Pfropfhülle B2, Acrylnitril (Monomer B22).

Die Pfropfcopolymere B-IV können eine uni-, bi-, tri- oder multimodale Partikelgrößenverteilung aufweisen. Eine bi-, tri- oder multimodale Partikelgrößenverteilung kann z.B. durch eine (teilweise) Agglomeration des feinteiligen Polybutadien-Saatlatices erreicht werden. Bevorzugt ist die Verwendung eines Pfropfcopolymer B-IV mit einer bimodalen Partikelgrößenverteilung, das durch Emulsionspolymerisation (Pfropfung) in Gegenwart einer Mischung aus einem agglomerierten Polybutadien-Latex B1-F mit einer Teilchengröße von 150 bis 300 nm und einem agglomerierten Polybutadien-Latex B1-G mit einer Teilchengröße von 450 bis 600 nm hergestellt wird. Das Mischungsverhältnis der Pfropfgrundlagen B1-F und B1-G beträgt vorzugsweise 50/50 bis 90/10.

In einer weiteren bevorzugten Ausführungsform kann ein Pfropfcopolymer B-V wie in WO 2014/170407 beschrieben als Pfropfcopolymer B eingesetzt werden. Bevorzugt kann ein Pfropfcopolymer B-V eingesetzt werden, erhalten durch Emulsionspolymerisation der Monomeren B21 und B22 in Gegenwart mindestens einer Pfropfgrundlage B1-H (z.B. agglomerierte Pfropfgrundlage B1-1, Seiten 30 und 31 von WO 2014/170407), wobei es sich um einen Polybutadien-Latex mit einer bimodalen Teilchengrößenverteilung handelt, welcher eine Fraktion an nicht agglomerierten Latexteilchen mit einem mittleren Teilchendurchmesser $D_{50}$ im Bereich von 80 bis 120 nm und eine Fraktion agglomerierter Latexteilchen mit einem mittleren Teilchendurchmesser $D_{50}$ im Bereich von 350 bis 550 nm aufweist.

Die Pfropfgrundlage B1-H wird typischerweise durch Agglomeration feinteiliger Polybutadien-Saatlatices (z.B. Pfropfgrundlage B1, Seite 27 von WO 2014/170407) mit einem agglomerierend wirkenden Acrylat-Copolymer (z.B. Copolymer C-1, Seite 28 von WO 2014/170407) erhalten.

Die feinteiligen Polybutadien-Saatlatices haben typischerweise einen mittleren Teilchendurchmesser $D_{50}$ im Bereich von 80 bis 120 nm und werden durch Emulsionspolymerisation von Butadien hergestellt, wobei bis zu 10 Gew.-% Butadien, basierend auf der Gesamtmenge der Monomeren, durch einen Vinylaromaten, z.B. Styrol, alpha-Methylstyrol, $C_1$-$C_4$-Alkylstyrole, ersetzt sein können. In dieser Ausführungsform wird die Pfropfgrundlage B1-H (agglomerierte Pfropfgrundlage B1 gemäß WO 2014/170407) mit Styrol und Acrylnitril gepfropft, wobei bevorzugt 15 bis 60 Gew.-% einer Mischung aus Styrol und Acrylnitril und ggf. weiteren Monomeren in Gegenwart von 40 bis 85 Gew.-% der Pfropfgrundlage B1-H (gerechnet als Feststoff des Latex) polymerisiert werden.

Einzelheiten zu dem agglomerierend wirkenden Copolymer und zu der Herstellung des Pfropfcopolymers basierend auf der Pfropfgrundlage B1-H können der WO 2014/170407 entnommen werden (insbesondere Herstellverfahren nach Seite 31 von WO 2014/170407).

Als optionale Komponente K1 kann das erfindungsgemäße Pfropfcopolymer B Additive und Hilfsstoffe enthalten, die typischerweise bei der Emulsionspolymerisation zugegeben werden. Beispielsweise kann die mindestens eine weitere Komponente K1 ausgewählt sein aus Agglomerationsmitteln, Emulgatoren, Molekulargewichtsregler, Initiatoren, Salzen, Säuren und Basen, wie oben beschrieben. Als Komponente K1 kommen grundsätzlich auch die weiter unten als Komponente K2 beschriebenen Additive in Frage, welche typischerweise ABS-Pfropfcopolymeren oder ABS-Formmassen beigesetzt werden.

Um die Pfropfcopolymere B während der Aufarbeitung vor thermischer Schädigung zu schützen, und um die Aufarbeitung sicher und gefahrlos durchführen zu können, ist es oftmals üblich Antioxidantien als Komponente K1 zuzugeben. Beispielsweise können ein oder mehrere phenolische Antioxidantien, sowie beliebige andere Substanzen, welche die thermische Beständigkeit der Pfropfcopolymere erhöhen bevorzugt nach der Emulsionspolymerisation (Schritt a), zugesetzt werden. Typischerweise werden diese Antioxidantien, z.B. in Form von Emulsionen oder Dispersionen, mit dem Pfropfcopolymeren B durch Rühren vermischt.

Die beschriebenen optionalen Komponenten K1 können an geeigneter Stelle des erfindungsgemäßen Verfahrens zur Herstellung der Pfropfcopolymer-Zusammensetzung zugegeben werden. Typischerweise umfasst das oben beschriebenen erfindungsgemäße Verfahren einen oder mehrere Schritte umfassend die Zugabe der mindestens einen optionalen Komponente K1. Typischerweise erfolgen diese Schritte der Zugabe der Komponente K1 an beliebiger oder geeigneter Stelle des Verfahrens.

Schritt b)

Der erfindungsgemäße Schritt b) umfasst das Fällen des Latex L des mindestens einen Pfropfcopolymers B nach der Emulsionspolymerisation, bevorzugt in einem kontinuierlichen Verfahrensschritt, durch Zugabe mindestens einer Fällungslösung F, enthaltend mindestens ein Salz und/oder mindestens eine Säure, wobei ein Teil des Latex L1 (dies umfasst auch den gesamten Latex L) und eine Fällungslösung F1 in einem ersten Behälter H1 bei einer Temperatur $T_1$ im Bereich von 30 bis 80 °C, bevorzugt 35 bis 75 °C, besonders bevorzugt 40 bis 70 °C, insbesondere bevorzugt 40 bis 60 °C, vermischt werden, und die Mischung aus Latex L1 und Fällungslösung F1 in mindestens zwei weitere Behältern H2 und H3 mit Temperaturen $T_2$ und $T_3$ im Bereich von 60 bis 130 °C, bevorzugt 82 bis 98 °C, besonders bevorzugt von 60 bis 90 °C, geführt wird, wobei optional weitere Teile des Latex L2 und/oder L3 und optional weitere Fällungslösungen F2 und/oder F3 zugegeben werden.

Die im Folgenden verwendete Bezeichnung "Mischung aus Latex L und Fällungslösung F" bezeichnet je nach Ausführungsform eine Mischung aus Latex L1 und Fällungslösung F1 und optional weiteren Teilen des Latex L2 und/oder L3 und optional weiteren Fällungslösungen F2 und/oder F3.

Bevorzugt wird die Mischung aus Latex L1 und Fällungslösung F1 in genau zwei weitere Behälter H2 und H3 mit Temperaturen $T_2$ und $T_3$ geführt. Weiterhin bevorzugt wird die Mischung aus Latex L1 und Fällungslösung F1 in genau drei weitere Behälter H2, H3 und H4 mit Temperaturen $T_2$, $T_3$ und $T_4$ geführt.

Die Fällungslösungen F1, F2 und F3 können identische Zusammensetzungen aufweisen oder verschieden sein. Die Fällungslösungen F, F1, F2 und F3 stellen typischerweise wässrige Lösungen enthaltend mindestens ein Salz und/oder mindestens eine Säure dar. Die gesamte eingesetzte Fällungslösung F setzt sich bevorzugt aus den Teilen F1, F2 und F3, insbesondere bevorzugt aus F1 und F2 zusammen, weiterhin bevorzugt stellt F1 die gesamte eingesetzte Fällungslösung F dar.

Das heißt, dass bevorzugt die gesamte Menge der Fällungslösung F im ersten Behälter zugegeben wird.

In dem beschriebenen Schritt b) findet der Kontakt zwischen Latex L und Fällungslösung F (Elektrolytlösung) statt, wobei im Fällbehälter H1 die Ausfällung des Pfropfcopolymer-Latex L beginnt und in den mindestens 2 weiteren, nachgeschalteten Fäll-Behältern H2 und H3, welche bevorzugt mit Rührern ausgestatteten sind, fortgeführt wird. Das Fällen des mindestens einen Pfropfcopolymer-Latex L kann bevorzugt durch kontinuierliche oder absatzweise Zugabe der Fällungslösung F durchgeführt werden.

In einer bevorzugten Ausführungsform umfasst der erfindungsgemäße Schritt b), dass mindestens ein Pfropfcopolymer ausgewählt aus B-I, B-II, B-III, B-VI und B-V, jeweils in seiner Latex-Form, durch Zugabe der mindestens einen Fällungslösung F enthaltend mindestens ein Salz und/oder Säure gefällt wird. Es ist zudem möglich, dass ein oder mehrere der Pfropfcopolymer ausgewählt aus B-I, B-II, B-III, B-VI und B-V nach der Emulsionspolymerisation homogen vermischt werden und anschließend die Mischung (in Form eines Latex) durch Zugabe der mindestens einen Fällungslösung F gefällt wird.

In einer bevorzugten Ausführungsform umfasst der erfindungsgemäße Schritt b), dass die Pfropfcopolymere B-I und B-II vermischt werden und die Mischung der Pfropfcopolymere durch Zugabe der mindestens einen Fällungslösung F enthaltend mindestens ein Salz und/oder Säure gefällt wird. Hierbei werden insbesondere die Pfropfcopolymere B-I und B-II jeweils in ihrer Latex-Form nach der Emulsionspolymerisation homogen vermischt. Das erhaltene Latexgemisch der Pfropfcopolymere B-I und B-II wird wie in den Schritten c) und optional d) beschrieben weiter aufgearbeitet.

Als Fällungslösung F zum Fällen des mindestens einen Pfropfcopolymers B nach der Emulsionspolymerisation können insbesondere wässrige Salzlösungen, beispielsweise wässrige Lösungen von Magnesiumsulfat, Kieserit ($Mg[SO_4] \cdot H_2O$), Pentahydrit ($Mg[SO_4] \cdot 5H_2O$), Hexahydrit ($Mg[SO_4] \cdot 6H_2O$) und Epsomit ($Mg[SO_4] \cdot 7H2O$, Bittersalz), Calciumchlorid, Natriumchlorid oder Mischungen hiervon eingesetzt werden. Bevorzugt ist es auch eine wässrige Säurelösung als Fällungslösung einzusetzen, bevorzugte Säuren sind Schwefelsäure, Essigsäure und Mischungen hiervon. Bevorzugt werden anorganische Säuren eingesetzt. In einer bevorzugten Ausführungsform enthält die Fällungslösung F (insbesondere F1 und optional F2 und/oder F3) mindestens ein Salz ausgewählt aus Magnesiumsulfat, Calciumchlorid, und Natriumchlorid und/oder mindestens eine anorganische Säure, bevorzugt Schwefelsäure. Bevorzugt kann als Fällungslösung F eine Schwefelsäure mit einer Konzentration im Bereich von 0,1 bis 20 Gew.-%, bevorzugt 0,5 bis 20 Gew.-%, eingesetzt werden.

Bevorzugt ist es auch möglich Mischung von wässrigen Salzlösungen und Säuren (z. B. Schwefelsäure, Essigsäure) als Fällungslösung einzusetzen.

Besonders bevorzugt erfolgt das Fällen des mindestens einen Pfropfcopolymers B in Schritt b) durch Einwirkung einer Kombination von wässrigen Salz- und Säurelösungen, bevorzugt der oben genannten Salze und Säuren. Ganz besonders bevorzugt erfolgt das Fällen durch Einwirken einer Kombination einer wässrigen Lösungen von Magnesiumsulfat und Schwefelsäure mit einer Konzentration im Bereich von 0,1 bis 20 Gew.-%, bevorzugt 0,5 bis 20 Gew.-%.

In einer bevorzugten Ausführungsform enthält die Fällungslösung F einen Teil $S_R$ (rückgeführter Anteil des abgetrennten Serum S) des in Schritt c) abgetrennten Serums S. Insbesondere enthält die Fällungslösung in dieser Ausführungsform eine oder mehrere der oben beschrieben wässrigen Salz- und/oder Säurelösungen als frische Elektrolytlösung und einen Teil $S_R$ (rückgeführter Anteil des abgetrennten Serum S) des in Schritt c) abgetrennten Serums. Bevorzugt besteht die Fällungslösung F aus den genannten Komponenten.

In einer besonders bevorzugten Ausführungsform werden eine wässrige Magnesiumsulfat-Lösung und/oder eine Schwefelsäure (0,5 bis 20 Gew.-%) kontinuierlich und gegebenenfalls gleichzeitig in einer oder mehrerer Stufen zu dem Latex L des Pfropfcopolymers B dosiert.

In einer bevorzugten Ausführungsform wird die Fällungslösung F aus dem rückgeführten Teil des Serums $S_R$ und frischer wässriger Salz- und/oder Säurelösung vorgemischt und vollständig oder teilweise als F1 und optional als F2 und/oder F3 mit dem Latex L in den Behältern H1 und optional in H2 und/oder H3 vermischt. In dieser Ausführungsform sind die Fällungslösungen F1, F2 und F3 in ihren Zusammensetzung identisch. Typischerweise werden 50 bis 100 Gew.-% der gesamten Fällungslösung F (vorgemischte Lösung aus $S_R$ und frischer wässriger Salz- und/oder Säurelösung) als F1 im Behälter H1 zugeführt, 0 bis 10 Gew.-% der gesamten Fällungslösung F als F2 im Behälter H2 zugeführt, und 0 bis 10 Gew.-% der gesamten Fällungslösung F als F3 im Behälter H3 zugeführt.

Typischerweise werden 50 bis 100 Gew.-% der gesamten Menge Latex L als L1 im Behälter H1 zugeführt, 0 bis 10 Gew.-% der gesamten Menge Latex L als L2 im Behälter H2 zugeführt und 0 bis 10 Gew.-% der gesamten Menge Latex L als L3 im Behälter H3 zugeführt. Bevorzugt wird die gesamte Fällungslösung F und der der gesamte Latex L im Behälter H1 gemischt, d.h. L1 ist 100 Gew.-% von L und F1 ist 100 Gew.-% von F.

Bevorzugt erfolgt im Behälter H3 keine weitere Zugabe von Fällungslösung F und/oder Latex L. Besonders bevorzugt wird in den Behälter H3 ausschließlich die Mischung aus Behälter H2 geführt (L3 und F3 sind Null).

Vorzugsweise werden 50 bis 100 Gew.-% der gesamten Fällungslösung F aus Säure- und/oder Salz-Lösung sowie $S_R$ vorgemischt, bevor diese mit dem Latex L bzw. L1 in Behälter H1 vermischt wird. Grundsätzlich ist es auch möglich, zunächst ein Konzentrat enthaltend mindestens ein Salz und/oder mindestens eine Säure, als Fällungslösung F1 mit dem Latex L1 im Behälter H1 zu vermischen und die überwiegende Menge des zurückgeführten Serums $S_R$ als F2 im Behälter H2 zuzuführen. In einer bevorzugten Ausführungsform des Verfahrens werden 50 bis 100 Gew.-% der gesamten Fällungslösung F als F1 mit 90 bis 100 Gew.-% der gesamten Menge Latex L als L1 im Behälter H1 vermischt und 0 bis 10 Gew.-% der gesamten Menge Latex L als L2 im Behälter H2 zugeführt. Diese besondere Ausführungsform des Verfahrens ist bevorzugt, wenn eine kontinuierliche mechanische Entwässerung mit der Vermeidung von Feinpulveranteilen zur Anwendung kommen soll, z.B. bei Verwendung von Schubzentrifugen.

Das Vermischen des Latex L1 und der Fällungslösung F1 erfolgt im ersten Behälter H1 durch den Fluss der beiden Ströme L1 und F1, wobei der erste Behälter H1 ein Strömungsrohr darstellt. Eine mögliche Ausführungsform ist ein Rohrstück, in den die beiden Stoffströme Fällungslösung F1 und Pfropfcopolymer-Latex L1 dosiert werden und als Mischung das Rohrstück in Richtung des Behälters H2 verlassen.

In einer bevorzugten Ausführungsform stellen die mindestens zwei nachfolgenden Behälter, z.B. H2 und H3 oder H2, H3 und H4, kontinuierlich betriebenen Rührbehälter, beispielsweise kontinuierliche Rührkessel dar.

Das Volumen $V_1$ des ersten Behälters H1 ist erfindungsgemäß kleiner oder gleich 30 %, bevorzugt kleiner oder gleich 10 %, besonders bevorzugt kleiner oder gleich 5 %, des Volumens $V_2$ des zweiten Behälters H2. In einer bevorzugten Ausführungsform ist das Volumen $V_1$ des ersten Behälters H1 kleiner oder gleich 30 %, bevorzugt kleiner oder gleich 10 %, besonders bevorzugt kleiner oder gleich 5 %, des Volumens $V_2$ des zweiten Behälters H2 und des Volumens $V_3$ des dritten Behälters H3.

In einer bevorzugten Ausführungsform weisen die mindestens zwei weiteren Behälter, insbesondere H2 und H3, ein gleiches Volumen und/oder eine gleiche Bauart auf.

Bevorzugt beträgt das Volumen $V_1$ des ersten Behälters H1 0,1 bis 30 %, bevorzugt 0,1 bis 10 %, insbesondere bevorzugt 0,5 bis 5 %, des Volumens $V_2$ des zweiten Behälters H2. Bevorzugt beträgt das Volumen $V_1$ des ersten Behälters H1 0,1 bis 10 %, bevorzugt 0,5 bis 5 %, des Volumens $V_2$ des zweiten Behälters H2 und des Volumen $V_3$ des dritten Behälters H3.

In einer bevorzugten Ausführungsform umfasst das Verfahren in Schritt b) als letzte Stufe, dass die Mischung aus Fällungslösung und Latex, bzw. gefälltem Latex, vor der Entwässerung (Schritt c) in einen Abkühlbehälter geführt wird. In einer bevorzugten Ausführungsform kann es sich bei dem Abkühlbehälter um einen Spiralwärmetauscher, beispielsweise wie in DE 10 2006 044 270 A1 beschrieben, handeln. Bevorzugt liegt die Temperatur im Abkühlbehälter im Bereich von 20 bis 80 °C, bevorzugt von 20 bis 70 °C. Bevorzugt kann die Mischung aus Behälter H3 in einem weiteren Behälter H4, z.B. einem Spiralwärmetauscher, auf eine Temperatur $T_4$ von kleiner 70 °C abgekühlt werden. Bevorzugt kann die Mischung aus Behälter H4 in einem weiteren Behälter H5, z.B. einem Spiralwärmetauscher, auf eine Temperatur $T_4$ von kleiner 70 °C abgekühlt werden.

Die Temperatur $T_1$ im ersten Behälter H1 beträgt 30 bis 80 °C, bevorzugt 35 bis 75 °C, besonders bevorzugt 40 bis 70 °C, insbesondere bevorzugt 40 bis 60 °C. Die Temperaturen T in den Behältern H beziehen sich typischerweise auf die mittlere Temperatur des Inhalts des entsprechenden Behälters.

Die Temperaturen in den mindestens zwei weiteren Behältern, insbesondere $T_2$ und $T_3$ in den Behältern H2 und H3, liegen typischerweise im Bereich von 60 bis 130 °C, bevorzugt 82 bis 98 °C, besonders bevorzugt von 60 bis 90 °C.

In einer bevorzugten Ausführungsform ist die Temperatur $T_2$ in Behälter H2 um mindestens 10 °C, bevorzugt um mindestens 15 °C, höher als die Temperatur $T_1$ in Behälter H1.

Bevorzugt weist der Fällbehälter H2 eine niedrigere Temperatur auf als Fällbehälter H3, aber eine höhere Temperatur als Fällbehälter H1 (d.h. $T_1 < T_2 < T_3$). Bevorzugt ist die Temperatur $T_2$ in Behälter H2 um mindestens 10 °C, bevorzugt um mindestens 15 °C, geringer ist als die Temperatur $T_3$ in Behälter H3.

In einer weiteren bevorzugten Ausführungsform ist die Temperatur $T_2$ in Behälter H2 gleich oder nahezu gleich mit der Temperatur $T_3$ in Behälter H3. In einer weiteren bevorzugten Ausführungsform ist die Temperatur $T_2$ in Behälter H2 gleich oder nahezu gleich mit der Temperatur $T_3$ in Behälter H3 und den Temperaturen in den optionalen nachfolgenden Behältern, z.B. H4 und/oder H5.

In einer bevorzugten Ausführungsform liegt die Temperatur $T_1$ in Behälter H1 im Bereich von 40 bis 60 °C, die Temperatur $T_2$ in Behälter H2 im Bereich von 61 bis 84 °C und die Temperatur $T_3$ in Behälter H3 im Bereich von 85 bis 100 °C.

In einer bevorzugten Ausführungsform beträgt die mittlere Verweilzeit $t_1$ im Behälter H1 mindestens 1 Sekunden (s), bevorzugt mindestens 5 s, weiterhin bevorzugt mindestens 10 s, weiterhin bevorzugt mindestens 15 s. In einer bevorzugten Ausführungsform beträgt die mittlere Verweilzeit $t_1$ im Behälter H1 höchstens 3.000 s, bevorzugt höchstens 1.000 s, besonders bevorzugt höchstens 100 s. Bevorzugt liegt die mittlere Verweilzeit $t_1$ der Mischung aus Latex L und Fällungslösung F (insbesondere Latex L1 und Fällungslösung F1) im Behälter H1 im Bereich von 1 bis 1000 s, bevorzugt von 5 bis 100 s, insbesondere bevorzugt von 10 bis 50 s.

Typischerweise beträgt die mittlere Verweilzeit $t_2$ und/oder $t_3$ je Behälter H2 und H3 mindestens 5 Minuten (min), bevorzugt mindestens 10 min, besonders bevorzugt mindestens 15 min. Bevorzugt liegt die mittlere Verweilzeit der Mischung aus Latex L und Fällungslösung F in den Behältern H2 und H3 jeweils im Bereich von 5 bis 60 min; bevorzugt von 10 bis 45 min; besonders bevorzugt von 10 bis 35 min. Die folgenden optionalen Behälter, H4, H5 usw., weisen typischerweise die gleichen Verweilzeiten auf wie H2 und H3. In einer bevorzugten Ausführungsform sind die mittleren Verweilzeit $t_2$ und $t_3$ gleich oder nahezu gleich.

In einer bevorzugten Ausführungsform liegt das Verhältnis der mittlere Verweilzeit $t_1$ im ersten Behälter H1 zu der mittleren Verweilzeit $t_2$ im zweiten Behälter H2 ($t_1/t_2$) im Bereich von 1:10 bis 1:1.000, bevorzugt 1:20 bis 1:500.

Schritt c)

Der erfindungsgemäße Schritt c) umfasst das mechanisches Entwässern des gefällten Pfropfcopolymers B aus Schritt b), bevorzugt mittels Zentrifugation und/oder Filtration, wobei ein abgetrenntes Serum S und ein Pfropfcopolymer B erhalten werden, wobei das Pfropfcopolymer B (auch als wasserfeuchtes Pfropfcopolymer bezeichnet) eine Restfeuchte von kleiner oder gleich 25 Gew.-%, bevorzugt kleiner oder gleich 20 Gew.-%, aufweist.

Bevorzugt wird das ausgefällten Pfropfcopolymer nach dem Abkühlen auf eine Temperatur von kleiner 80°C, vorzugsweise auf etwa 70°C, z.B. in einem Abkühlbehälter wie einem Spiralwärmetauscher entsprechend der DE 10 2006 044 270 A1, durch diskontinuierliche Zentrifugation, z.B. mit einer Schälzentrifuge, oder kontinuierliche Zentrifugation, z.B. mit einer Schubzentrifuge, vom Serum S abgetrennt und das wasserfeuchte Pfropfcopolymer B mit einer Restfeuchte $\leq$ 25 Gew.-% erhalten.

Die Restfeuchte (oder auch als Wassergehalt bezeichnet) gibt den Anteil an Wasser in Gewichtsprozent, bezogen auf das feuchte Pfropfcopolymer B, an. Insbesondere wird der Wassergehalt mit Hilfe geeigneter Analysegeräte (z.B. Trockenwaagen) bestimmt, wobei die Probe so lange getrocknet wird, bis eine Gewichtskonstanz der Probe über einen bestimmten Zeitraum erreicht ist. Beispielsweise kann der Wassergehalt des Pfropfcopolymers B in einem Halogen Moisture Analyzer HR73 von Mettler-Toledo, bei 180 °C bestimmt werden, bis eine Gewichtskonstanz für 30 Sekunden erreicht wird.

Bevorzugt wird in Schritt c) oder in einem nachgeschalteten Waschschritt wie unten beschrieben, ein Pfropfcopolymer B mit einem Wassergehalt im Bereich von 5 bis 25 Gew.-%, bevorzugt von 10 bis 25 Gew.-%, insbesondere bevorzugt von 12 bis 20 Gew.-%, erhalten.

Bevorzugt erfolgt das mechanische Entwässern des gefällten Pfropfcopolymers B mittels Zentrifugation. Typischerweise wird das gefällte Pfropfcopolymer mit einer Zentripetalbeschleunigung von 200 bis 1000 g (mit g mittlere Erdbeschleunigung), bevorzugt 300 bis 800 g über einen Zeitraum von 1 Sekunde bis 5 Minuten, bevorzugt 1 bis 120 Sekunden, zentrifugiert.

Während oder nach der Zentrifugation kann ein optionaler Waschschritt, vorzugsweise mit Wasser, erfolgen, um den Gehalt an wasserlöslichen Elektrolyten zu vermindern. In einer Ausführungsform schließt sich nach dem mechanischen Entwässern des Pfropfcopolymers B ein Waschschritt an, wobei das entwässerte Pfropfcopolymer B vorzugsweise mit Wasser oder einer Mischung aus Wasser und einem polaren, mit Wasser mischbaren organischen Lösungsmittel behandelt wird. Bevorzugt wird das Wasser oder die Mischung nach der Behandlung durch Filtration oder Zentrifugation abgetrennt. Bevorzugt entsteht dabei ein Pfropfcopolymer B mit einem Wassergehalt von kleiner oder gleich 25 Gew.-%. Bevorzugt weist das Pfropfcopolymer B nach dem optionalen Waschschritt einen Wassergehalt wie oben angegeben auf.

Das im Schritt c) von Pfropfcopolymer B abgetrennte Serum S wird bevorzugt zu einem Teil $S_R$ (rückgeführter Anteil) in den Fällprozess zurückgeführt und beispielsweise als Teil der vorgemischten Fällungslösung F eingesetzt. Der verbleibende Anteil $S_A$ des abgetrennten Serums S wird typischerweise als Abwasser ausgeschleust und entsorgt. Typischerweise werden 15 bis 65 Gew.-%, bevorzugt 25 bis 55 Gew.-% des abgetrennten Serums S als $S_R$ zurückgeführt.

Schritt d)

Der optionale Schritt d) umfasst das Trocknen des entwässerten Pfropfcopolymers B aus Schritt c). In einer bevorzugten Ausführungsform umfasst das Verfahren den Schritt d):

d) Trocknen des entwässerten Pfropfcopolymers B aus Schritt c), wobei ein Pfropfcopolymer-Pulver erhalten wird, das eine Restfeuchte von kleiner oder gleich 5 Gew.-% aufweist.

Bevorzugt erfolgt das Trocknen des wasserfeuchten Pfropfcopolymers B mit einer Restfeuchte von kleiner oder gleich 25 Gew.-% unter Verwendung eines Trocknungsgases, wobei das Pfropfcopolymer B in dem Trocknungsgas bewegt wird (z.B. von dem strömenden Trocknungsgas mitgerissen wird) und das Trocknungsgas eine Temperatur im Bereich von 50 bis 160 °C, bevorzugt von 55 bis 155 °C, besonders bevorzugt von 60 bis 150 °C, aufweist. Bevorzugt wird als Trocknungsgas Luft, Stickstoff oder beliebige Mischungen hiervon verwendet.

In einer bevorzugten Ausführungsform erfolgt das Trocknen des entwässerten Pfropfcopolymers B in Schritt d) unter Verwendung eines Fließbetttrockners (Wirbelschichttrockner) und/oder einem Stromtrockners (Flashtrockner). Insbesondere erfolgt das Trocknen in Schritt d) wie in WO2017/093468 beschrieben.

Fließbetttrockner (Wirbelschichttrockner) und Stromtrockner (Flashtrockner) sind dem Fachmann bekannt. Insbesondere handelt es sich um Trocknungsvorrichtungen für partikelförmige, rieselfähige Materialien, wie sie in Krischer/Kröll, Trocknungstechnik, Zweiter Band, Trockner und Trocknungsverfahren (Springer-Verlag, 1959) beschrieben werden.

Insbesondere wird das Trocknen in Schritt d) unter Verwendung eines Fließbetttrockners durchgeführt, wobei das Trocknungsgas eine Temperatur im Bereich von 50 bis 100 °C, bevorzugt 55 bis 90 °C, besonders bevorzugt 60 bis 85 °C, aufweist und die mittlere Verweilzeit des Pfropfcopolymers B im Fließbetttrockner 1 bis 60 min, bevorzugt 5 bis 50 min, besonders bevorzugt 10 bis 40 min, beträgt.

Insbesondere wird das Trocknen in Schritt d) unter Verwendung eines Stromtrockners durchgeführt, wobei das Trocknungsgas eine Temperatur im Bereich von 100 bis 160 °C, bevorzugt 110 bis 155 °C, besonders bevorzugt 130 bis 150 °C, aufweist und die mittlere Verweilzeit des Pfropfcopolymers B im Stromtrockner typischerweise 1 bis 300 Sekunden, bevorzugt 1 bis 120 Sekunden, besonders bevorzugt 5 bis 60 Sekunden, beträgt.

In einer bevorzugten Ausführungsform weist das getrocknete Pfropfcopolymer-Pulver erhalten in Schritt d) eine Restfeuchte im Bereich von 0,01 bis 5 Gew.-%, bevorzugt 0,05 bis 2 Gew.-%, insbesondere bevorzugt 0,1 bis 1 Gew.-%, auf.

Die oben beschriebene Pfropfcopolymer-Zusammensetzung, beispielsweise das getrocknete Pfropfcopolymer-Pulver, kann mit einem oder mehreren thermoplastischen Copolymeren A, insbesondere einem oder mehreren SAN-Copolymeren, und gegebenenfalls weiteren Additiven K2 vermischt werden, wobei eine thermoplastische Formmasse erhalten wird.

Gegenstand der Erfindung ist daher zudem ein Verfahren zur Herstellung einer thermoplastischen Formmasse, insbesondere einer ABS-Formmasse, enthaltend:

A: 5 bis 95 Gew.-%, bevorzugt 40 bis 80 Gew.-%, mindestens eines thermoplastischen Copolymers A hergestellt aus:

A1: 50 bis 95 Gew.-%, bevorzugt 65 bis 80 Gew.-%, besonders bevorzugt 69 bis 80 Gew.-%, bezogen auf das Copolymer A, mindestens eines Monomers A1, ausgewählt aus Styrol, $\alpha$-Methylstyrol, p-Methylstyrol und (Meth)acrylsäure-$C_1$-$C_8$-alkylester (z.B. Methyl-methacrylat, Ethylmethacrylat, n-Butylacrylat, tert-Butylacrylat), und

A2: 5 bis 50 Gew.-%, bevorzugt 20 bis 35 Gew.-%, besonders bevorzugt 20 bis 31 Gew.-%, bezogen auf das Copolymer A, mindestens eines Monomers A2, ausgewählt aus Acrylnitril, Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid),

B: 5 bis 95 Gew.-%, bevorzugt 20 bis 60 Gew.-%, mindestens einer Pfropfcopolymer-Zusammensetzung hergestellt nach einem Verfahren wie oben beschrieben, und

K2: 0 bis 90 Gew.-%, bevorzugt 0 bis 40 Gew.-%, besonders bevorzugt 0 bis 5 Gew.-%, oftmals 0,1 bis 5 Gew.-% mindestens einer weiteren Komponente K2,

umfassend die Schritte:

a) bis c) und optional d) wie oben beschrieben sowie

e) Vermischen des mindestens einen thermoplastischen Copolymers A, der mindestens einen Pfropfcopolymer-Zusammensetzung und optional der mindestens einen weiteren Komponente K2.

Unter ABS-Formmassen im Sinne der vorliegenden Erfindung sind Formmassen enthaltend mindestens 10 Gew.-%, bevorzugt mindestens 60 Gew.-%, besonders bevorzugt mindestens 95 Gew.-%, des thermoplastischen Copolymers A und des Pfropfcopolymers B (in der Summe) wie oben beschrieben zu verstehen. Bevorzugt enthält die ABS-Formmasse ausschließlich das thermoplastische Copolymer A und das Pfropfcopolymer B als polymere Komponenten. ABS-Formmassen im Sinne der vorliegenden Erfindung sind auch Polymerblends enthaltend das thermoplastische Copolymer A und das Pfropfcopolymer B wie oben beschrieben und mindestens ein kautschukfreies nicht aus Vinylmonomeren aufgebautes Thermoplast-Harz, beispielsweise ein Polykondensat, bevorzugt ausgewählt aus Polycarbonaten, Polyestercarbonaten, Polyestern und Polyamiden (als Komponente K2).

Der Ausdruck (Meth)acryl, beispielsweise in der Bezeichnung (Meth)acrylsäure oder (Meth)acrylsäure-$C_1$-$C_8$-alkylester, umfasst im Sinne der vorliegenden Erfindung die entsprechenden Acryl- und/oder Methacryl-Verbindungen.

Im Sinne der vorliegenden Erfindung bezieht sich die Maßeinheit ppm auf mg/kg.

Bevorzugt handelt es sich bei dem thermoplastischen Copolymer A um ein kautschukfreies Copolymer A.

Insbesondere bevorzugt ist das thermoplastische Copolymer A hergestellt aus (bzw. besteht aus):

A1: 50 bis 95 Gew.-%, bevorzugt 65 bis 80 Gew.-%, besonders bevorzugt 69 bis 80 Gew.-%, bezogen auf das Copolymer A, eines Monomers A1, ausgewählt aus Styrol, $\alpha$-Methylstyrol oder Mischungen von Styrol und mindestens einem weiteren Monomer ausgewählt aus $\alpha$-Methylstyrol, p-Methylstyrol und (Meth)acrylsäure-$C_1$-$C_8$-alkylester (z.B. Methyl-methacrylat, Ethylmethacrylat, n-Butylacrylat, tert-Butylacrylat),

A2: 5 bis 50 Gew.-%, bevorzugt 20 bis 35 Gew.-%, besonders bevorzugt 20 bis 31 Gew.-%, bezogen auf das Copolymer A, eines Monomers A2, ausgewählt aus Acrylnitril oder Mischungen von Acrylnitril und mindestens einem weiteren Monomer ausgewählt aus Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid).

Insbesondere bevorzugt ist das thermoplastische Copolymer A hergestellt aus (bzw. besteht aus):

A1: 50 bis 95 Gew.-%, bevorzugt 65 bis 80 Gew.-%, besonders bevorzugt 69 bis 80 Gew.-%, insbesondere bevorzugt 71 bis 80 Gew.-%, bezogen auf das Copolymer A, des Monomers A1, ausgewählt aus Styrol, $\alpha$-Methylstyrol oder Mischungen von Styrol und $\alpha$-Methylstyrol, und

A2: 5 bis 50 Gew.-%, bevorzugt 20 bis 35 Gew.-%, besonders bevorzugt 20 bis 31 Gew.-%, insbesondere bevorzugt 20 bis 29 Gew.-%, bezogen auf das Copolymer A, eines Monomers A2, ausgewählt aus Acrylnitril oder Mischungen von Acrylnitril und Methacrylnitril.

Besonders bevorzugt ist ein thermoplastisches Copolymer A, welches weniger oder gleich 30 Gew.-%, bezogen auf das gesamte Copolymer A, Acrylnitril aufweist.

In einer bevorzugten Ausführungsform handelt es sich bei Monomer A1 um Styrol oder $\alpha$-Methylstyrol bei Monomer A2 um Acrylnitril. In einer weiter bevorzugten Ausführungsform handelt es sich bei Monomer A1 um eine Mischung aus Styrol und $\alpha$-Methylstyrol und bei Monomer A2 um Acrylnitril, wobei die Mischung für Monomer A1 mindestens 10 Gew.-%, bevorzugt mindestens 50 Gew.-% und besonders bevorzugt mindestens 90 Gew.-% Styrol, enthält.

Das thermoplastische Copolymer A weist vorzugsweise mittlere Molekulargewichte $M_w$ im Bereich von 20.000 bis 200.000 g/mol auf. Bevorzugt weist das thermoplastische Copolymer A Grenzviskositäten $[\eta]$ im Bereich von 20 bis 110 ml/g (gemessen in Dimethylformamid bei 25 °C) auf. Einzelheiten zur Herstellung des thermoplastischen Copolymers A sind beispielsweise in DE-A 24 20 358 und DE-A 27 24 360 beschrieben. Ebenso geeignete thermoplastischen Copolymere A sind auch in DE-A 1 971 3509 beschrieben.

Die thermoplastischen Copolymere können sowohl durch rein thermische Initiierung als auch durch Zusatz von Initiatoren, insbesondere von Peroxiden, hergestellt werden. Geeignete thermoplastische Copolymere A können bevorzugt durch Masse- oder Lösungspolymerisation hergestellt werden.

Die thermoplastischen Copolymere A können allein oder in beliebiger Mischung zugesetzt werden.

Weitere Komponenten K2

Die thermoplastischen Formmassen können optional ein oder mehrere weitere Komponenten K2 in einer Menge von 0 bis 90 Gew.-%, bevorzugt 0 bis 40 Gew.-%, oftmals 0,1 bis 90 Gew.-%, bevorzugt 1 bis 40 Gew.-%, bezogen auf die gesamte Formmasse, enthalten. Bei der Komponente K2 kann es sich insbesondere um ein übliches Additiv und/oder um eine weitere polymere Komponente, beispielsweise aromatische Polycarbonate, aromatische Polyestercarbonate, Polyester und Polyamide, handeln.

Typischerweise kann die Formmasse 0 bis 5 Gew.-%, bevorzugt 0,1 bis 5 Gew.-%, bezogen auf die gesamte Formmasse, mindestens einer weiteren Komponente K2 ausgewählt aus üblichen Additiven und Zusatzstoffen enthalten. Hierbei können insbesondere die bei Herstellung, Aufarbeitung, Weiterverarbeitung und Endverformung erforderlichen bzw. zweckmäßigen Additive zugesetzt werden, z. B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die thermoplastische Formmasse kann insbesondere kautschukfreie nicht aus Vinylmonomeren aufgebaute Thermoplastharze als weitere Komponente K2 enthalten. Insbesondere handelt es sich bei diesen Thermoplastharzen um Polykondensate, z. B. aromatische Polycarbonate, aromatische Polyestercarbonate, Polyester und Polyamide.

Geeignete thermoplastische Polycarbonate und Polyestercarbonate sind bekannt und beispielsweise in DE-A 14 95 626, DE-A 22 32 877, DE-A 27 03 376, DE-A 27 14 544, DE-A 30 00 610, DE-A 38 32 396, DE-A 30 77 934, sowie insbesondere in DE-A 100 08 420 und EP-A 2 606 073 beschrieben.

Typischerweise kann die thermoplastische Formmasse (ABS-Blend) 10 bis 90 Gew.-%, bevorzugt 10 bis 60 Gew.-%, besonders bevorzugt 10 bis 40 Gew.-%, bezogen auf die gesamte thermoplastische Formmasse, mindestens eines kautschukfreien nicht aus Vinylmonomeren aufgebautes Thermoplastharz, bevorzugt ausgewählt aus Polycarbonaten und Polyamiden, als weitere Komponente K2 enthalten.

In einer bevorzugten Ausführungsform werden die oben beschriebenen Pfropfcopolymere B-I und B-II nach der getrennten Herstellung gemischt und in Schritt b) gemeinsam gefällt (co-gefällt). Das aufgearbeitete Pfropfcopolymer wird dann typischerweise in Schritt e) mit dem thermoplastischen Copolymer A und optional weiteren Komponenten K2 vermischen.

Daneben ist es auch möglich die oben beschriebenen Pfropfcopolymere B-I und B-II nach der getrennten Herstellung getrennt aufzuarbeiten, d.h. die erfindungsgemäßen Schritte a) bis c) und optional d) (Herstellen und Fällen der Pfropfcopolymere, Entwässern der wasserfeuchten Pfropfcopolymere und optional Trocknen) getrennt durchzuführen und die aufgearbeiteten Pfropfcopolymere B-I und B-II in Schritt e) mit dem thermoplastischen Copolymer A und optional weiteren Komponenten K2 zu vermischen.

Schritt e)

Der erfindungsgemäße Schritt e) umfasst das Vermischen des mindestens einen thermoplastischen Copolymers A, der mindestens einen Pfropfcopolymer-Zusammensetzung erhalten durch das oben beschriebene erfindungsgemäße Verfahren, beispielsweise des getrockneten Pfropfcopolymer-Pulvers B aus Schritt d), und optional der weiteren Komponente(n) K2.

Die Verfahren und Vorrichtungen zur Durchführung des Schritts e) sind dem Fachmann im Wesentlichen bekannt. Typischerweise umfasst Schritt e) das Schmelzecompoundieren und/oder das Schmelzextrudieren und wird bevorzugt unter Verwendung von Innenknetern, Extrudern und/oder Doppelwellenschnecken durchgeführt. Bevorzugt erfolgt das Vermischen in Schritt e) bei Temperaturen von 200 bis 300 °C. Insbesondere erfolgt das Vermischen des thermoplastischen Copolymers A, der Pfropfcopolymer-Zusammensetzung und optional der weiteren Komponente(n) K2 in Schritt e) in einem Extruder bei einer Temperatur im Bereich von 200 bis 300 °C.

Das Vermischen des thermoplastischen Copolymers A, der mindestens einen Pfropfcopolymer-Zusammensetzung, beispielsweise des getrockneten Pfropfcopolymer-Pulvers B aus Schritt d), und optional weiteren Komponenten K2 kann in bekannter Weise sowohl sukzessive als auch simultan erfolgen. Es ist zudem möglich, dass zunächst einige Komponenten bei Temperaturen von 15 bis 40 °C, insbesondere bei Raumtemperatur (etwa 20 °C) vermischt werden und später die Temperatur auf 200 bis 300 °C erhöht wird, wobei optional weiterer Komponenten K2 zugegeben werden können.

In einer weiteren bevorzugten Ausführungsform kann das in Schritt c) erhaltene entwässerte Pfropfcopolymer B mit einem oder mehreren thermoplastischen Copolymeren A, insbesondere einem oder mehreren SAN-Copolymer, in der Schmelze vermischt und dann in einem Extruder oder einer Compoundier-Anlage getrocknet werden. Die Trocknung kann beispielsweise wie in EP 0 768 157 A1, EP 0 867 463 A1, WO 03/099 926 A1, EP 2 584 001 A1 und WO 2008/020012 A2 erfolgen. Als Ergebnis erhält man eine Formmasse wie beschrieben, die gegebenenfalls mit weiteren Komponenten K2 vermischt und zu Granulaten aufgearbeitet werden kann.

Die mit dem erfindungsgemäßen Verfahren hergestellten thermoplastischen Formmassen können zur Herstellung von Formteilen jeder Art verwendet werden. Diese können durch Spritzguss, Extrusion und Blasformverfahren hergestellt werden. Eine weitere Form der Verarbeitung ist die Herstellung von Formteilen durch Tiefziehen aus zuvor hergestellten Platten oder Folien und das Verfahren der Folienhinterspritzung. Beispiele für solche Formteile sind Folien, Profile, Gehäuseteile jeder Art, z. B. für Haushaltsgeräte wie Saftpressen, Kaffeemaschinen, Mixer; für Büromaschinen wie Monitore, Drucker, Kopierer; Automobilaußen- und -Innenteilen; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Insbesondere können die erfindungsgemäßen Formmassen beispielsweise zur Herstellung von folgenden Formteilen verwendet werden:

Innenausbauteile für Schienenfahrzeuge, Schiffe, Flugzeuge, Busse und andere Kraftfahrzeuge; Karosserieaußenteile im Kfz-Bereich; Gehäuse von Kleintransformatoren enthaltenden Elektrogeräten; Gehäuse für Geräte zur Informationsverarbeitung und - Übermittlung; Gehäuse und Verkleidung von medizinischen Geräten; Massagegeräte und Gehäuse dafür; Spielzeug; Spielfahrzeuge für Kinder; flächige Wandelemente; Gehäuse für Sicherheitseinrichtungen; wärmeisolierte Transportbehältnisse; Vorrichtung zur Haltung oder Versorgung von Kleintieren; Formteile für Sanitär- und Badausrüstungen; Abdeckgitter für Lüfter-Öffnungen; Formteile für Garten- und Gerätehäuser;, Gehäuse für Gartengeräte.

Beschreibung der Figur:

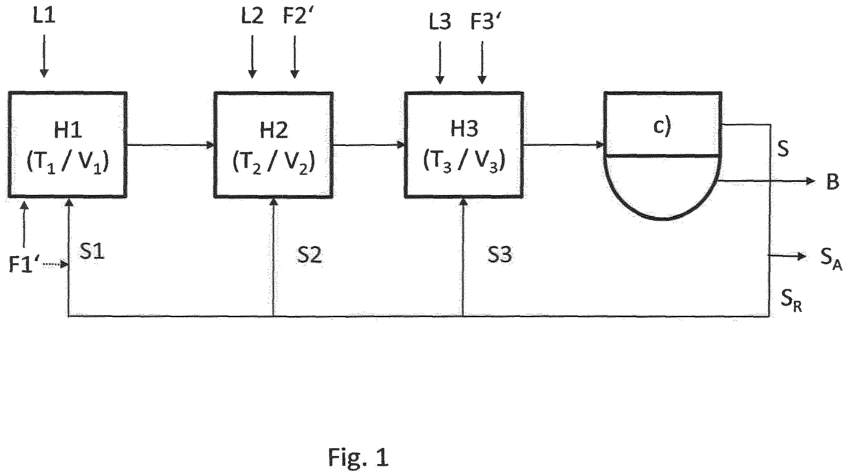

Figur 1 zeigt ein Fließschema einer möglichen Ausführungsform der Erfindung. In den ersten Fäll-Behälter H1 mit dem Volumen $V_1$ und der Temperatur $T_1$ wird ein Teil L1 des Pfropfcopolymer-Latex und eine Fällungslösung F1' zugegeben.

Die Mischung aus Behälter H1 (gefällter bzw. vorgefällter Pfropfcopolymer-Latex) wird in den zweiten Fällbehälter H2 mit dem Volumen $V_2$ und der Temperatur $T_2$ geführt. Die Mischung aus Behälter H2 (gefällter Pfropfcopolymer-Latex) wird in den dritten Fällbehälter H3 mit dem Volumen $V_3$ und der Temperatur $T_3$ geführt.

Das bei der Entwässerung in Schritt c) abgetrennte Serum (auch Mutterlauge) wird zu einem Teil $S_A$ ausgeschleust und zu einem Teil $S_R$ zurückgeführt. Der zurückgeführte Anteil des Serums $S_R$ kann zu unterschiedlichen Anteilen S1, S2 und S3 den Behältern H1, H2 und/oder H3 zugeführt werden. Es ist zudem möglich in die Behälter H1, H2 und/oder H3 frische Elektrolytlösung (Fällungslösung) F1', F2' oder F3' enthaltend mindestens eine Säure und/oder ein Salz zuzugeben. Es ist zudem möglich den Teil des zurückgeführten Serums S1 zuerst mit der frischen Fällungslösung F1' zu mischen (gestrichelter Pfeil) und dann dem Latex L1 in Behälter H1 zuzugeben. Dies gilt ebenso für S2/F2' und S3/F3' und die Behälter H2 und H3.

Bevorzugt beträgt der Teil L1 mindestens 90 Gew.-% der gesamten Mengen des Latex L (Pfropfcopolymer B nach der Emulsionspolymerisation). Ebenso bevorzugt beträgt der Teil L1 90 Gew.-% und L2 10 Gew.-% der gesamten Menge des Latex L.

Die Erfindung wird durch die nachfolgenden Beispiele und Ansprüche weiter erläutert.

Beispiele

Beispiel 1 - Herstellung der ABS-Kautschuke (Pfropfcopolymer B)

1.1 Emulsionspolymerisation

Pfropfcopolymer B-I-a

30 Gew.-Teile (gerechnet als Feststoff) eines anionisch emulgierten Polybutadien-Latex mit einem mittleren Teilchendurchmesser $D_{50}$ von 299 nm und einem Gelgehalt von 60 Gew.-%, welcher unter Verwendung eines Polybutadien-Saatlatex mit einem mittleren Teilchendurchmesser $D_{50}$ von 113 nm durch radikalische Emulsionspolymerisation hergestellt wurde, und 30 Gew.-Teile (gerechnet als Feststoff) eines anionisch emulgierten Polybutadien-Latex mit einem mittleren Teilchendurchmesser $D_{50}$ von 371 nm und einem Gelgehalt von 82 Gew.-%, welcher unter Verwendung eines Polybutadien-Saatlatex mit einem mittleren Teilchendurchmesser $D_{50}$ von 113 nm durch radikalische Emulsionspolymerisation hergestellt wurde, wurden gemischt und mit entionisiertem Wasser auf einen Feststoffgehalt von ca. 27 Gew.-% gebracht.

Die Mischung der Polybutadien-Latices wurde auf 60°C erwärmt und mit 0,5 Gew.-Teilen Kaliumperoxodisulfat (gelöst in Wasser) versetzt. Danach wurden 40 Gew.-Teile eines Monomergemisches aus 73 Gew.-% Styrol, 27 Gew.-% Acrylnitril und 0,1 Gew.-Teile tert-Dodecylmercaptan innerhalb von 6 Stunden gleichmäßig dosiert. Parallel dazu wurde 1 Gew.-Teil (gerechnet als Festsubstanz) des Natriumsalzes eines Harzsäuregemisches (gelöst in alkalisch eingestelltem Wasser) über einen Zeitraum von 6 Stunden dosiert. Im Laufe der 6 Stunden wurde die Reaktionstemperatur von 60°C auf 80°C angehoben. Nach Ende aller Dosierungen folgte eine zweistündige Nachreaktionszeit bei 80°C. Anschließend wurde der Pfropflatex auf Raumtemperatur abgekühlt. Der gravimetrisch ermittelte Feststoffgehalt (Trocknung im Umlufttrockenschrank bei 180°C, 23 Minuten) des Pfropfcopolymerlatex betrug 34,9 Gew.-%.

Pfropfcopolymer B-I-b

Es wurde eine Mischung von Polybutadien-Latices wie unter B-I-a beschrieben hergestellt.

Zu der Mischung von Polybutadien-Latices wurden 40 Gew.-Teile eines Monomergemisches aus 75 Gew.-% Styrol und 25 Gew.-% Acrylnitril innerhalb von 4 Stunden dosiert. Mit Start der Monomerdosierung wurden als Initiator 0,14 Gew.-Teile tert-Butylhydroperoxid und 0,14 Gew.-Teile Natriumascorbat über einen Zeitraum von 9 Stunden dosiert; gleichzeitig wurden 1,7 Gew.-Teile (gerechnet als Festsubstanz) des Natriumsalzes eines Harzsäuregemisches (gelöst in alkalisch eingestelltem Wasser) über einen Zeitraum von 6 Stunden dosiert. Im Laufe der ersten 6 Stunden wurde die Reaktionstemperatur von 60°C auf 80°C angehoben.

Nach Ende der Initiator-Dosierung folgte eine einstündige Nachreaktionszeit bei 80°C. Anschließend wurde der Pfropflatex auf Raumtemperatur abgekühlt. Der gravimetrisch ermittelte Feststoffgehalt (Trocknung im Umlufttrockenschrank bei 180°C, 23 Minuten) des Pfropfcopolymer-Latex betrug 35,0 Gew.-%.

Pfropfcopolymer B-II

50 Gew.-Teile (gerechnet als Feststoff) eines anionisch emulgierten Polybutadien-Latex mit einem mittleren Teilchendurchmesser $D_{50}$ von 113 nm und einem Gelgehalt von 91 Gew.-%, welcher unter Verwendung eines Polybutadiensaatlatex mit einem mittleren Teilchendurchmesser $D_{50}$ von 49 nm durch radikalische Saatpolymerisation hergestellt wurde, wurde mit entionisiertem Wasser auf einen Feststoffgehalt von ca. 27 Gew.-% gebracht.

Der Polybutadien-Latex wurde auf 60°C erwärmt und mit 0,5 Gew.-Teilen Kaliumperoxodisulfat (gelöst in Wasser) versetzt. Danach wurden 50 Gew.-Teile eines Gemisches aus 73 Gew.-% Styrol, 27 Gew.-% Acrylnitril und 0,1 Gew.-Teile tert-Dodecylmercaptan innerhalb von 6 Stunden gleichmäßig dosiert. Parallel dazu wurde 1 Gew.-Teil (gerechnet als Festsubstanz) des Natriumsalzes eines Harzsäuregemisches (gelöst in alkalisch eingestelltem Wasser) über einen Zeitraum von 6 Stunden dosiert. Im Laufe der 6 Stunden wurde die Reaktionstemperatur von 60°C auf 80°C angehoben. Nach Ende aller Dosierungen folgte eine zweistündige Nachreaktionszeit bei 80°C. Anschließend wurde der Pfropflatex auf Raumtemperatur abgekühlt. Der gravimetrisch ermittelte Feststoffgehalt (Trocknung im Umlufttrockenschrank bei 180°C, 23 Minuten) des Pfropfcopolymerlatex betrug 35,2 Gew.-%.

Pfropfcopolymer B-III

60,0 Gew.-Teile (gerechnet als Feststoff) eines anionisch emulgierten Polybutadien-Latex mit einem mittleren Teilchendurchmesser $D_{50}$ von 330 nm und einem Gelgehalt von 85 Gew.-% wurden mit entionisiertem Wasser auf einen Feststoffgehalt von ca. 28 Gew.-% gebracht und auf 60°C erwärmt.

40,0 Gew.-Teile einer Monomermischung bestehend aus 74 Gew.-% Styrol und 26 Gew.-% Acrylnitril sowie 0,4 Gew.-Teilen tert-Dodecylmercaptan und 0,4 Gew.-% des Natriumsalzes eines Harzsäuregemisches (gelöst in alkalisch eingestelltem Wasser) wurden innerhalb von 3 Stunden gleichmäßig dosiert. Die Pfropfpolymerisation der Monomere wurde durch den Einsatz von 0,005 Gew.-Teilen Eisen(II)sulfat-Heptahydrat, 0,22 Gew.-Teile Dextrose, 0,17 Gew.-Teile Natriumdiphosphat-Decahydrat sowie 0,11 Gew.-Teilen Cumolhydroperoxid auf die Pfropfgrundlage durchgeführt. Die Temperatur wurde dabei innerhalb von 4 Stunden von 60°C auf 72°C gesteigert und für 2 weitere Stunden bei 70°C gehalten. Anschließend wurde die Reaktionsmischung innerhalb von 1,5 Stunden auf 55°C abgekühlt. Dann wurde der Pfropflatex auf Raumtemperatur abgekühlt. Der gravimetrisch ermittelte Feststoffgehalt (Trocknung im Umlufttrockenschrank bei 180°C, 23 Minuten) des Pfropfcopolymerlatex betrug 35,1 Gew.-%. Die Dispersion wurde mit 0,25 Gew.-% phenolischem Antioxidans und 0,25 Gew.-% thiolischem Antioxidans versetzt.

1.2 Fällung der Pfropfcopolymeren B nach Emulsionspolymerisation durch Mischen der Fällungslösung F (Elektrolytlösung) mit den Pfropfcopolymerlatices L

Beispiel 1A (erfindungsgemäß):

Die Pfropfcopolymere B-I-a und B-II (in Form von Latices) wurden im Verhältnis 60% : 40%, gerechnet als Feststoff, durch Rühren vermischt. Zu dieser Mischung wurde 1,0 Gew.-% eines phenolischen Antioxidans (Irganox 1076, BASF SE), bezogen auf den Gesamtfeststoff der Pfropfcopolymer-Mischung B-I-a und B-II, in Form einer Dispersion zugegeben und vermischt.

Diese Mischung und eine unten beschriebene Fällungslösung F (Elektrolytlösung) wurden kontinuierlich im Behälter H1 bei einer Temperatur von 45 bis 50°C gemischt. Dabei hat die Pfropfcopolymer-Mischung eine Temperatur von etwa 30 bis 35°C und die Elektrolytlösung eine Temperatur von etwa 60 bis 68°C. Hierbei wurden folgende Stoffströme kontinuierlich in den Behälter H1 dosiert und dabei gemischt:

- 100 Gew.-Teile/h der Pfropfcopolymer-Mischung B-I und B-II als 35,0 gew.%-iger Latex

- Fällungslösung F-I (Elektrolytlösung) bestehend aus einer Mischung aus 75 Gew.-Teile/h Anteil rückgeführtes Serum S-I (vgl. S1 in Fig. 1);
  2,8 Gew.-Teile/h einer 18 gew.%-igen wässrigen Magnesiumsulfatlösung und
  0,51 Gew.-Teile/h einer 15 gew.%-igen wässrigen Schwefelsäurelösung

Das Gemisch aus Behälter H1 wurde in einen zweiten Behälter H2 geführt. Durch Dampfeinspeisung in den Fällbehälter H2 wurde die Temperatur im Fällbehälter H2 auf 94°C gehalten (Produkttemperatur der ausgefällten Pfropfcopolymer-Dispersion). Es wurde keine weitere Fällungslösung und kein weiterer Latex L in Behälter H2 geführt. Das Gemisch aus Behälter H2 wurde in einen dritten Behälter H3 geführt. Die Temperatur im Fällbehälter H3 betrug 92°C. Es wurden keine weiteren Stoffe in den Fällbehälter H3 außer der kontinuierlichen Dosierung aus dem Fällbehälter H2 dosiert.

Das Volumen des Behälters H1, der als Rohr ausgeführt war, betrug 2,0 Volumen-% des Fällbehälters H2, wobei der Behälter H1 zu 100% gefüllt war.

Die mittlere Verweilzeit $t_1$ im Behälter H1 betrug 30 Sekunden (s). Die mittlere Verweilzeit in den Behälter H2 und H3 betrug jeweils 21 Minuten, wobei die Behälter jeweils zu 85 % gefüllt waren.

Es war ein weiterer Behälter H4 nachgeschaltet, der einen kontinuierlich betriebenen Kreislauf mit einem Spiralwärmetauscher enthielt, mit dessen Hilfe die Produkttemperatur der ausgefällten Pfropfcopolymer-Dispersion auf 70°C gehalten wurde. Die mittlere Verweilzeit im Behälter H4 betrug 21 Minuten (min).

Die Behälter H2 bis H4 waren mit Rührern ausgestattet, mit welchen der Inhalt kontinuierlich durchmischt wurde.

Das gefällte Pfropfcopolymer wurde durch eine diskontinuierliche Zentrifugation mit einer Schälzentrifuge bei einer Temperatur von 70°C und einer Zentripetalbeschleunigung $a_Z$ von 511 $g$ (mit $g$ mittlere Erdbeschleunigung) für einen Zeitraum von 26 Sekunden vom Serum S abgetrennt, so dass ein wasserfeuchtes Pfropfcopolymer B mit einer Restfeuchte von 21,2 Gew.-% erhalten wurde.

Die Restfeuchte ist definiert als der Anteil des Wassers in einer wasserfeuchten Mischung. Die Restfeuchte RF wurde gravimetrisch durch Trocknung einer Probe von etwa 2,5 g bei 180°C bis zur Gewichtskonstanz, jedoch maximal für 10 Minuten, ermittelt.

Das wasserfeuchte Pfropfcopolymer wurde in einem Stromtrockner getrocknet. Die Korngröße $D_{50}$ [mm], die Schüttdichte [kg/L] und die Restfeuchte nach Trocknung wurden bestimmt. Die Korngröße $D_{50}$ wurde durch eine Sieb-analyse nach ISO 3310-1 mit den folgenden Sieben 63, 100, 150, 200, 300, 500, 800 und 2000 $\mu$m durchgeführt.

Ein Teil des Serums (rückgeführtes Serum $S_R$) wurde wie oben beschrieben in den Prozess zurückgeführt. Das Serum enthielt 768 mg/L gesamten organischen Kohlenstoff (TOC). Der nicht in den Fällungsprozess zurückgeführte Anteil des Serums $S_A$ wird als Abwasser entsorgt und muss behandelt werden, um die TOC-Fracht zu verringern.

Beispiel 1B (nicht erfindungsgemäß) - ohne Behälter H1

Die Fällung einer Mischung der Pfropfcopolymer-Latices B-I-a und B-II (60 : 40) wurde in ähnlicher Weise wie Beispiel 1A jedoch ohne den Behälter H1 durchgeführt.

Die Fällungslösung F-I und die Pfropfcopolymer-Latices wurden getrennt über separate Leitungen in den Fällbehälter H2 dosiert. Alle anderen Parameter bei der Fällung, wie Temperaturen, Stoffströme und Verweilzeiten waren identisch mit Beispiel 1A.

Das gefällte Pfropfcopolymer wurde durch eine diskontinuierliche Zentrifugation mit einer Schälzentrifuge bei einer Temperatur von 70°C und einer Zentripetalbeschleunigung $a_Z$ von 581 $g$ (mit $g$ mittlere Erdbeschleunigung) für einen Zeitraum von 67 Sekunden weitgehend vom Serum S abgetrennt, so dass eine wasserfeuchtes Pfropfcopolymer B mit einer Restfeuchte von 27,1 Gew.-% erhalten wurde. Dieses Material wurde wie in Beispiel 1A beschrieben in einem Stromtrockner getrocknet.

Beispiel 1C (erfindungsgemäß):

Die Fällung wurde grundsätzlich in gleicher Weise wie Beispiel 1A jedoch mit einer höheren Temperatur von 50 - 55°C in Fällbehälter H1, einer niedrigeren Temperatur in Fällbehälter H2 (86°C) und einer höheren Temperatur in Fällbehälter H3 (94°C) durchgeführt. Die weitere Behandlung erfolgte ebenfalls wie in Beispiel 1A beschrieben.

Beispiel 1D (erfindungsgemäß):

Die Fällung wurde grundsätzlich in gleicher Weise wie Beispiel 1A jedoch mit einer höheren Temperatur in Fällbehälter H1 (50 - 55°C), einer niedrigeren Temperatur in Fällbehälter H2 (78°C) und einer höheren Temperatur in Fällbehälter H3 (94°C) durchgeführt. Die weitere Behandlung erfolgte ebenfalls wie in Beispiel 1A beschrieben.

Beispiel 1E (erfindungsgemäß):

Die Fällung wurde grundsätzlich in gleicher Weise wie Beispiel 1A jedoch mit einer höheren Temperatur in Fällbehälter H1 (50 - 55°C), einer niedrigeren Temperatur in Fällbehälter H2 (70°C) und einer höheren Temperatur in Fällbehälter H3 (94°C) durchgeführt. Die weitere Behandlung erfolgte ebenfalls wie in Beispiel 1A beschrieben.

Beispiel 1F (erfindungsgemäß):

Die Fällung wurde grundsätzlich in gleicher Weise wie Beispiel 1A durchgeführt, jedoch wurde anstelle von 0,51 Gew. Teile/h einer 15 gew.%-igen wässrigen Schwefelsäurelösung 0,23 Gew. Teile/h einer 50 gew.%-igen wässrigen Essigsäurelösung eingesetzt (Fällungslösung F-II). Die weitere Behandlung erfolgte ebenfalls wie in Beispiel 1A beschrieben.

Das Pfropfcopolymer wird durch eine diskontinuierliche Zentrifugation mit einer Schälzentrifuge bei einer Temperatur von 70°C und einer Zentripetalbeschleunigung $a_Z$ von 581 $g$ (mit $g$ mittlere Erdbeschleunigung) für einen Zeitraum von 33 Sekunden weitgehend vom Serum abgetrennt, so dass eine wasserfeuchtes Pfropfcopolymer B mit einer Restfeuchte von 21,0 Gew.-% erhalten wird.

Das wasserfeuchte Pfropfcopolymer wird in einem Stromtrockner getrocknet. Die Korngröße $D_{50}$ [mm], die Schüttdichte [kg/L] und die Restfeuchte nach Trocknung wurden bestimmt.

Das Serum S enthielt 1.220 mg/L gesamten organischen Kohlenstoff (TOC). Der nicht in den Fällprozess zurückgeführte Anteil des Serums $S_A$ wurde als Abwasser entsorgt und musste behandelt werden, um die TOC-Fracht zu verringern.

Beispiel 1G (nicht erfindungsgemäß): höhere Temperatur in Fällbehälter H1 (94°C)

Die Pfropfcopolymere B-I und B-II (Latices) wurden im Verhältnis 60 : 40, gerechnet als Feststoff, durch Rühren vermischt. Die Durchführung erfolgte in Analogie zu Beispiel 1A. Die Pfropfcopolymer-Mischung B-I und B-II sowie die Fällungslösung F-I (Elektrolytlösung) wurden kontinuierlich im Behälter H1 bei einer Temperatur von 94°C gemischt. Dazu war es notwendig die Pfropfcopolymer-Mischung auf eine Temperatur von ca. 94°C und die Fällungslösung ebenfalls auf eine Temperatur von ca. 94°C zu erwärmen. Diese Vorgehensweise stellte sich jedoch als nachteilig heraus, da beim Aufwärmen der Pfropfcopolymer-Mischung kleine Mengen an Koagulat entstanden, die rasch zu Dosierproblemen des Latex und zu einem instabilen Versuchsverlauf und schließlich zu einem Abbruch des Versuchs führten. Die in der Tabelle 1 angegebenen Messwerte wurden an Proben, die bis zum Abbruch genommen wurden, ermittelt. Anstatt der Trocknung im Stromtrockner wurde das bis zum Abbruch gewonnene Feuchtpulver in einem Labortrockenschrank bei 70°C 2 Tage lang getrocknet. Als nachteilig stellte sich die im Vergleich zu Beispiel 1A die deutlich größere Korngröße $D_{50}$ von 0.8 mm heraus, die aufgrund ihrer Größe und der damit längeren Trocknungszeit für eine Trocknung in einem Stromtrockner weniger geeignet ist.

Beispiel 1H (nicht erfindungsgemäß) - Art und Größe Behälter H1

Die Durchführung erfolgte in Analogie zu Beispiel 1A, jedoch wurde ein Behälter H1 eingesetzt, welcher in Form und Funktion identisch mit Behälter H2 war, d.h. es handelte sich bei Behälter H1 in diesem Fall um einen gerührten Behälter mit einem Füllstand von 85% und einer mittleren Verweilzeit von 21 Minuten. Die Temperatur im Behälter H1 betrug 50°C.

Die Pfropfcopolymer-Mischung und die Fällungslösung wurden mit den gleichen Temperaturen wie in Beispiel 1A eingesetzt. Diese Fahrweise erwies sich jedoch als sehr ungünstig, da sich bereits nach sehr kurzer Fahrweise große Menge Koagulat am Rührer des Behälters H1 ablagerten, die zum Abbruch des Versuches führten. Es konnten keine repräsentativen Proben für Analysen gewonnen werden.

Beispiel 1I (nicht erfindungsgemäß) - Pfropfcopolymer B-III / ohne Behälter H1

42,8 Gew.-Teile des Pfropfcopolymer-Latex B-III wurden mit 57,2 Gew.-Teilen Fällungslösung F-III, bestehend aus 0,78 gew.%-iger Schwefelsäure, gefällt.

Die Stoffströme wurden kontinuierlich im Behälter H2 bei einer Temperatur von 70°C gemischt. Es waren zwei weiterer Behälter H3 und H4 (identisch in Form und Größe mit H2) nachgeschaltet. Die Temperatur im Fällbehälter H3 betrug 81°C und die Temperatur des zuletzt durchlaufenen Behälter H4 betrug 82°C. Es wurden keine weiteren Stoffe in den Fällbehälter H3 außer der kontinuierlichen Dosierung aus dem Fällbehälter H2 dosiert. Die mittlere Verweilzeit in den Behälter H2, H3 und H4 betrug jeweils 15 Minuten, wobei die Behälter jeweils zu 85% gefüllt waren.

Es war ein weiterer Behälter H5 nachgeschaltet, der einen kontinuierlich betriebenen Kreislauf mit einem Spiralwärmetauscher enthielt, mit dessen Hilfe die Produkttemperatur der ausgefällten Pfropfcopolymer-Dispersion auf 70°C gehalten wird.

Das Pfropfcopolymer wurde durch eine diskontinuierliche Zentrifugation mit einer Schälzentrifuge bei einer Temperatur von 70°C und einer Zentripetalbeschleunigung $a_Z$ von 447 $g$ (mit $g$ mittlere Erdbeschleunigung) für einen Zeitraum von 46 Sekunden weitgehend vom Serum abgetrennt, so dass ein wasserfeuchtes Pfropfcopolymer B mit einer Restfeuchte von 31,4 Gew.-% erhalten wurde. Das wasserfeuchte Pfropfcopolymer B wurde in einem Stromtrockner getrocknet. Die Korngröße $D_{50}$ [mm], die Schüttdichte [kg/L] und die Restfeuchte nach Trocknung wurden bestimmt.

Beispiel 1J (erfindungsgemäß)

Die Fällung wird wie im Beispiel 1I durchgeführt, jedoch wurden die Stoffströme des Pfropfcopolymer-Latex B-III und der Fällungslösung F-III im Behälter H1, der als Rohr ausgestaltet war, vermischt. Das Volumen des Behälters H1 betrug 0,8 Volumen-% des Fällbehälters H2, wobei der Behälter H1 zu 100% gefüllt war. Die Temperatur in Fällbehälter H1 betrug 60 °C. Die mittlere Verweilzeit $t_1$ in H1 betrug 9 Sekunden und in H2 bis H4 jeweils 15 Minuten.

Das gefällte Pfropfcopolymer wurde durch eine diskontinuierliche Zentrifugation mit einer Schälzentrifuge bei einer Temperatur von 70°C und einer Zentripetalbeschleunigung $a_Z$ von 447 $g$ (mit $g$ mittlere Erdbeschleunigung) für einen Zeitraum von 46 Sekunden weitgehend vom Serum abgetrennt, so dass ein wasserfeuchtes Pfropfcopolymer B mit einer Restfeuchte von 20,1 Gew.-% erhalten wird. Das wasserfeuchte Pfropfcopolymer B wurde in einem Stromtrockner getrocknet. Die Korngröße $D_{50}$ [mm], die Schüttdichte [kg/L] und die Restfeuchte nach Trocknung wurden bestimmt.

Beispiel 1K (erfindungsgemäß)

Die Fällung wurde wie im Beispiel 1J durchgeführt, mit dem Unterschied, dass die Temperatur in Fällbehälter H1 50 °C beträgt.

Das gefällte Pfropfcopolymer B wurde durch eine diskontinuierliche Zentrifugation mit einer Schälzentrifuge bei einer Temperatur von 70°C und einer Zentripetalbeschleunigung $a_Z$ von 447 $g$ (mit $g$ mittlere Erdbeschleunigung) für einen Zeitraum von 46 Sekunden weitgehend vom Serum abgetrennt, so dass ein wasserfeuchtes Pfropfcopolymer B mit einer Restfeuchte von 20,1 Gew.-% erhalten wurde. Das wasserfeuchte Pfropfcopolymer B wurde in einem Stromtrockner getrocknet. Die Korngröße $D_{50}$ [mm], die Schüttdichte [kg/L] und die Restfeuchte nach Trocknung wurden bestimmt.

Beispiel 1L (erfindungsgemäß):

Die Pfropfcopolymere B-I-a und B-I-b (in Form von Latices) wurden im Verhältnis 25% : 75%, gerechnet als Feststoff, durch Rühren vermischt. Zu dieser Mischung wurden 1,0 Gew.-% eines phenolischen Antioxidans (Irganox 1076, BASF SE), bezogen auf den Gesamtfeststoff der Pfropfcopolymer-Mischung B-I-a und B-I-b, in Form einer Dispersion zugegeben und vermischt.

Diese Mischung und die unten beschriebene Fällungslösung F-IV (Elektrolytlösung) wurden kontinuierlich im Behälter H1 bei einer Temperatur von 45 bis 50°C gemischt. Dabei hat die Pfropfcopolymer-Mischung eine Temperatur von etwa 30 bis 35°C und die Elektrolytlösung eine Temperatur von etwa 60 bis 68°C. Hierbei wurden folgende Stoffströme kontinuierlich in den Behälter H1 dosiert und dabei gemischt:

- 100 Gew.-Teile/h der Pfropfcopolymer-Mischung B-I-a und B-I-b als 35,0 gew.-%iger Latex
- Fällungslösung F-IV (Elektrolytlösung) bestehend aus einer Mischung aus

  45 Gew.-Teile/h Anteil rückgeführtes Serum S-IV (vgl. S1 in Fig. 1);
  3,0 Gew.-Teile/h einer 18 gew.-%igen wässrigen Magnesiumsulfatlösung und
  0,65 Gew. Teile/h einer 15 gew.-%igen wässrigen Schwefelsäurelösung

Das Gemisch aus Behälter H1 wurde in einen zweiten Behälter H2 geführt. Durch Dampfeinspeisung in den Fällbehälter H2 wurde die Temperatur im Fällbehälter H2 auf 94°C gehalten (Produkttemperatur der ausgefällten Pfropfcopolymer-Dispersion). Das Gemisch aus Behälter H2 wurde in einen dritten Behälter H3 geführt.

Die Temperatur im Fällbehälter H3 betrug 92°C. Es wurden keine weiteren Stoffe in den Fällbehälter H3 außer der kontinuierlichen Dosierung aus dem Fällbehälter H2 dosiert.

Das Volumen des Behälters H1, der als Rohr ausgeführt war, betrug 2,0 Volumen-% des Fällbehälters H2, wobei der Behälter H1 zu 100% gefüllt war. Die mittlere Verweilzeit im Behälter H1 betrug 30 Sekunden. Die mittlere Verweilzeit in den Behälter H2 und H3 betrug jeweils 21 Minuten, wobei die Behälter jeweils zu 85% gefüllt waren.

Es war ein weiterer Behälter H4 nachgeschaltet, der einen kontinuierlich betriebenen Kreislauf mit einem Spiralwärmetauscher enthielt, mit dessen Hilfe die Produkttemperatur der ausgefällten Pfropfcopolymer-Dispersion auf 70°C gehalten wurde; die mittlere Verweilzeit im Behälter H4 betrug 21 Minuten.

Die Behälter H2 bis H4 waren mit Rührern ausgestattet, mit welchen der Inhalt kontinuierlich durchmischt wurde.

Das gefällte Pfropfcopolymer wurde durch eine diskontinuierliche Zentrifugation mit einer Schälzentrifuge bei einer Temperatur von 70°C und einer Zentripetalbeschleunigung $a_Z$ von 378 $g$ (mit $g$ mittlere Erdbeschleunigung) für einen Zeitraum von 32 Sekunden vom Serum S abgetrennt, so dass ein wasserfeuchtes Pfropfcopolymer B mit einer Restfeuchte von 22,6 Gew.-% erhalten wurde.

Das wasserfeuchte Pfropfcopolymer wurde in einem Stromtrockner getrocknet. Die Korngröße $D_{50}$ [mm], die Schüttdichte [kg/L] und die Restfeuchte nach Trocknung wurden bestimmt.

Beispiel 1M (nicht erfindungsgemäß) - ohne Behälter H1

Die Fällung einer Mischung der Pfropfcopolymer-Latices B-I-a und B-I-b (25 : 75) wurde in ähnlicher Weise wie Beispiel 1L jedoch ohne den Behälter H1 durchgeführt.

Die Fällungslösung F-IV und die Pfropfcopolymer-Latices wurden getrennt über separate Leitungen in den Fällbehälter H2 dosiert. Alle anderen Parameter bei der Fällung, wie Temperaturen, Stoffströme und Verweilzeiten waren identisch mit Beispiel 1L.

Das gefällte Pfropfcopolymer wurde durch eine diskontinuierliche Zentrifugation mit einer Schälzentrifuge bei einer Temperatur von 70°C und einer Zentripetalbeschleunigung $a_Z$ von 567 $g$ (mit $g$ mittlere Erdbeschleunigung) für einen Zeitraum von 85 Sekunden weitgehend vom Serum S abgetrennt, so dass eine wasserfeuchtes Pfropfcopolymer B mit einer Restfeuchte von 27,5 Gew.-% erhalten wurde. Dieses Material wurde wie in Beispiel 1L beschrieben in einem Stromtrockner getrocknet.

In Tabelle 1 sind die Versuchsbedingungen sowie die Werte der Korngröße $D_{50}$ [mm], die Schüttdichten [kg/L] und die Restfeuchten nach Trocknung und nach Zentrifugation für die Beispiele 1A bis 1K zusammengestellt. Hierbei ist:

| | |
|---|---|
| $V_1$ | Volumen von Behälter H1 in Vol.-% relativ zu V2 (Volumen von Behälter H2) |
| $T_1$ | Temperatur in Behälter H1 |
| $T_2$ | Temperatur in Behälter H2 |
| $T_3$ | Temperatur in Behälter H3 |
| $T_4$ | Temperatur in Behälter H4 |
| $T_5$ | Temperatur in Behälter H5 |
| $t_1/t_2/t_3/t_4/t_5$ | Mittlere Verweilzeiten in den Behältern H1/H2/H3/H4/H5 |
| F-I | Fällungslösung nach Beispiel 1A |
| F-II | Fällungslösung nach Beispiel 1F |
| F-III | Fällungslösung nach Beispiel 1I |
| F-IV | Fällungslösung nach Beispiel 1L |
| RF | Restfeuchte in Gew.-% |
| $D_{50}$ | Korngröße $D_{50}$ des Pfropfcopolymers B nach der Trocknung in mm |
| SD | Schüttdichte des Pfropfcopolymers B nach der Trocknung in kg/L |
| $a_z$ | Zentripetalbeschleunigung |
| $g$ | mittlere Erdbeschleunigung |
| $t_z$ | Dauer der Zentrifugation |
| n.v. | Nicht vorhanden |
| n.b. | Nicht bestimmbar |

Aus Tabelle 1 wird ersichtlich, dass das erfindungsgemäßen Beispiel 1A unter Verwendung eines ersten Fällbehälters H1 mit $T_1$ kleiner 80 °C in Form eines Strömungsrohres mit einem Volumen von 2 % des Volumens des nachfolgenden Behälters H2 (d.h. $V_1 = 0,02 \cdot V_2$) eine signifikant niedrigere Restfeuchte nach der Zentrifugation aufweist im Vergleich zu Beispiel 1B ohne Behälter H1.

Obwohl das nicht erfindungsgemäße Beispiel 1B bei höherer Drehzahl und längeren Zentrifugationszeit als Beispiel 1A zentrifugiert wurde, zeigt das erfindungsgemäß gefällte Pfropfcopolymer 1A eine deutlich niedrigere Restfeuchte.

Eine besonders niedrige Restfeuchte nach der Zentrifugation wird erhalten, wenn die Temperatur $T_1$ in Fällbehälter H1 steigt und die Temperatur $T_2$ im zweiten Fällbehälter H2 sinkt, siehe Beispiele 1C bis 1E. Eine Temperatur $T_1$ im ersten Behälter von über 90 °C (Beispiel 1G) stellte sich als ungünstig heraus.

Beispiel 1F im Vergleich mit Beispiel 1A zeigt, dass Essigsäure in der Fällungslösung mit vergleichbar gutem Ergebnis eingesetzt werden kann wie Schwefelsäure. Es ist allerdings vorteilhafter statt Essigsäure Schwefelsäure bei der Fällung einzusetzen, da letztere bei gleicher Eignung einen deutlich geringen TOC-Wert im Abwasser verursacht.

Wird das Volumen $V_1$ des ersten Behälters H1 genauso groß gewählt wie das Volumen $V_2$ des nachfolgenden Behälter H2 (Beispiel 1H), werden ungünstige Ergebnisse erhalten bzw. ist die Fällung nicht durchführbar.

Aus Tabelle 1 wird außerdem ersichtlich, dass die erfindungsgemäßen Beispiele 1J und 1K (Fällung von Pfropfcopolymer B-III) eine niedrigere Restfeuchte nach Zentrifugation und damit eine bessere Entwässerbarkeit als das vergleichbare, nicht erfindungsgemäße Beispiel 1I haben.

Aus Tabelle 1 wird außerdem ersichtlich, dass das erfindungsgemäßen Beispiele 1L (Fällung von Pfropfcopolymer B-I-a/B-I-b) eine niedrigere Restfeuchte nach Zentrifugation und damit eine bessere Entwässerbarkeit aufweist als das vergleichbare, nicht erfindungsgemäße Beispiel 1M.

Tabelle 1: Zusammenfassung der Ergebnisse der Beispiele 1A bis 1F:

| | Beispiel | 1A | 1B | 1C | 1D | 1E | 1F |
|---|---|---|---|---|---|---|---|
| | Einheit | erfindungsgemäß | Vergleich | erfindungsgemäß | erfindungsgemäß | erfindungsgemäß | erfindungsgemäß |
| $V_1$ | [% relativ zu V2] | 2 | n.v. | 2 | 2 | 2 | 2 |
| $T_1$ | [°C] | 45 - 50 | n. v. | 50 - 55 | 50 - 55 | 50 - 55 | 45 - 50 |
| $T_2$ | [°C] | 94 | 94 | 86 | 78 | 70 | 94 |
| $T_3$ | [°C] | 92 | 92 | 94 | 94 | 94 | 92 |
| $T_4$ | [°C] | 70 | 70 | 70 | 70 | 70 | 70 |
| $t_1$ | [s] | 30 | n.v. | 30 | 30 | 30 | 30 |
| $t_2$ / $t_3$/ $t_4$ | [min] | 21 | 21 | 21 | 21 | 21 | 21 |
| Pfropf - copolymer | | B-I-a/B-II | B-I-a/B-II | B-I-a/B-II | B-I-a/B-II | B-I-a/B-II | B-I-a/B-II |
| Fällungslösung | | F-I | F-I | F-I | F-I | F-I | F-II |
| $a_Z$ | [$g$] | 511 | 581 | 511 | 511 | 511 | 581 |
| $t_Z$ | [s] | 26 | 67 | 26 | 26 | 26 | 33 |
| RF (nach Zentrifuge) | [Gew.-%] | 21,1 | 27,1 | 20,4 | 19,8 | 19,2 | 21,0 |
| $D_{50}$ | [mm] | 0,4 | 0,4 | 0,4 | 0,4 | 0,4 | 0,4 |
| SD | [kg/L] | 0,42 | 0,40 | 0,43 | 0,43 | 0,44 | 0,42 |
| RF (nach Trocknung) | [Gew.-%] | 0,95 | 0,87 | 0,75 | 0,82 | 0,66 | 0,8 |

Tabelle 1 - Fortsetzung: Zusammenfassung der Ergebnisse der Beispiele 1G bis 1K:

| | Beispiel | 1G | 1H | 1I | 1J | 1K | 1L | 1M |
|---|---|---|---|---|---|---|---|---|
| | Einheit | Vergleich | Vergleich | Vergleich | erfindungsgemäß | erfindungsgemäß | erfindungsgemäß | Vergleich |
| $V_1$ | [% relativ zu V2] | 2 | 100 | n. v. | 0,8 | 0,8 | 2 | n.v. |
| $T_1$ | [°C] | 94 | 50 | n. v. | 50 | 60 | 45-50 | n.v. |
| $T_2$ | [°C] | 94 | 94 | 70 | 70 | 70 | 94 | 94 |
| T3 | [°C] | 92 | 92 | 81 | 81 | 81 | 92 | 92 |
| $T_4$ | [°C] | 70 | 70 | 82 | 82 | 82 | 70 | 70 |
| $T_5$ | [°C] | n.v. | n. v. | 70 | 70 | 70 | n.v. | n.v. |
| $t_1$ | [s] | 30 | 21 | n. v. | 9 | 9 | 30 | 30 |
| $t_2/t_3/t_4$ | [min] | 21 | 21 | 15 | 15 | 15 | 21 | 21 |
| Pfropfcopolymer | | B-I-a/ B-II | B-I-a/ B-II | B-III | B-III | B-III | B-I-a/ B-I-b | B-I-a/ B-I-b |
| Fällungslösung | | F-I | F-I | F-III | F-III | F-III | F-IV | F-IV |
| $a_Z$ | [$g$] | 511 | n. b. | 707 | 707 | 707 | 378 | 567 |
| $t_Z$ | [s] | 26 | n. b. | 46 | 46 | 46 | 32 | 85 |
| RF (nach Zentrifuge) | [Gew.-%] | 21,0 | n. b. | 31,4 | 20,1 | 20,3 | 22,6 | 27,5 |
| $D_{50}$ | [mm] | 0,8 | n. b. | 0,35 | 0,32 | 0,33 | 0,4 | 0,4 |
| SD | [kg/L] | 0,43 | n. b. | 0,37 | 0,41 | 0,40 | 0,37 | 0,29 |
| RF (nach Trocknung) | [Gew.-%] | n. b. | n. b. | 0,92 | 0,88 | 0,87 | 0,9 | 0,9 |

Tabelle 1 - Fortsetzung: Zusammenfassung der Ergebnisse der Beispiele 1G bis 1K:

| | Beispiel | 1G | 1H | 1I | 1J | 1K | 1L | 1M |
|---|---|---|---|---|---|---|---|---|
| | Einheit | Vergleich | Vergleich | Vergleich | erfindungsgemäß | erfindungsgemäß | erfindungsgemäß | Vergleich |
| V1 | [% relativ zu V2] | 2 | 100 | n. v. | 0,8 | 0,8 | 2 | n.v. |
| $T_1$ | [°C] | 94 | 50 | n. v. | 50 | 60 | 45-50 | n.v. |
| $T_2$ | [°C] | 94 | 94 | 70 | 70 | 70 | 94 | 94 |
| $T_3$ | [°C] | 92 | 92 | 81 | 81 | 81 | 92 | 92 |
| $T_4$ | [°C] | 70 | 70 | 82 | 82 | 82 | 70 | 70 |
| $T_5$ | [°C] | n.v. | n. v. | 70 | 70 | 70 | n.v. | n.v. |
| $t_1$ | [s] | 30 | 21 | n. v. | 9 | 9 | 30 | 30 |
| $t_2/t_3/t_4$ | [min] | 21 | 21 | 15 | 15 | 15 | 21 | 21 |
| Pfropf - copolymer | | B-I-a/ B-II | B-I-a/ B-II | B-III | B-III | B-III | B-I-a/ B-I-b | B-I-a/ B-I-b |
| Fällungslösung | | F-I | F-I | F-III | F-III | F-III | F-IV | F-IV |
| $a_Z$ | [$g$] | 511 | n. b. | 707 | 707 | 707 | 378 | 567 |
| $t_Z$ | [s] | 26 | n. b. | 46 | 46 | 46 | 32 | 85 |
| RF (nach Zentrifuge) | [Gew.-%] | 21,0 | n. b. | 31,4 | 20,1 | 20,3 | 22,6 | 27,5 |
| $D_{50}$ | [mm] | 0,8 | n. b. | 0,35 | 0,32 | 0,33 | 0,4 | 0,4 |
| SD | [kg/L] | 0,43 | n. b. | 0,37 | 0,41 | 0,40 | 0,37 | 0,29 |
| RF (nach Trocknung) | [Gew.-%] | n. b. | n. b. | 0,92 | 0,88 | 0,87 | 0,9 | 0,9 |

Beispiel 2: Herstellen von ABS-Formmassen und -Formkörpern

2.1 Thermoplastisches Copolymer A

Als thermoplastisches Copolymer A wurde ein statistisches Styrol/Acrylnitril-Copolymer A-IV (Styrol: Acrylnitril-Gewichtsverhältnis 73 : 27) mit einer gewichtsgemittelten Molmasse $M_w$ von 106.000 g/mol und einer zahlengemittelten Molmasse $M_n$ von 15.000 g/mol, eingesetzt.

Das thermoplastische Copolymer A-IV wurde erhalten durch radikalische Lösungspolymerisation mit peroxidischer Initiierung. Das thermoplastische Copolymer A-IV wies ein Oligomerengehalt mit einer Molmasse kleiner 1000 g/mol von 1,0 Gew.-% auf. Die Molmassen $M_w$ und $M_n$ und der Oligomerengehalt wurden durch Gelpermeationschromatographie mit Tetrahydrofuran als Lösungsmittel und Polystyrol zur Kalibrierung ermittelt wurden. Die Bestimmung des Oligomerenanteils in statistischen Styrol/Acrylnitril-Copolymeren ist zudem in K. Kirchner, H. Schlapkohl, Makromol. Chem. 177 (1976) 2031-2042, "The Formation of Oligomers in the Thermal Copolymerisation of the Styrene/Acrylonitrile-System" beschrieben.

2.2. Lineares Polycarbonat K2

Als Komponente K2 wurde ein lineares Polycarbonat auf Basis von Bisphenol-A mit einer gewichtsmittleren molaren Masse $M_W$ von 27.500 (bestimmt durch Gelpermeationschromatographie in Methylenchlorid bei 25°C) eingesetzt.

2.3 Thermoplastische Formmassen 2A bis 2F und 2I bis 2K

Die getrockneten Pfropfcopolymer B aus den Beispielen 1A bis 1F sowie 1I bis 1K und das thermoplastisches Copolymer A-IV wurden in Anteilen gemäß Tabelle 2 (Angaben in Gew.-%) zusammen mit 2,0 Gew.-Teilen Ethylenbisstearylamid, 0,3 Gew.-Teilen Magnesiumstearat und 0,15 Gew.-Teilen eines Polydimethylsiloxans mit einer Viskosität von 1000 centiStokes auf einem Extruder ZSK 25 (Hersteller Coperion) bei 200 bis 250°C vermischt und nach Granulierung zu Formkörpern verarbeitet.

Es wurden die Formmassen 2A bis 2F und 2I bis 2K und daraus hergestellte Formkörper erhalten. Die Formkörper entsprechen den Vorgaben der jeweiligen Prüfnormen. Folgende Eigenschaften der Formmassen bzw. der Formkörper wurden ermittelt:

- Kerbschlagzähigkeit bei Raumtemperatur (ak RT) und bei -20°C (ak -20°C) nach ISO 180/1A (Einheit: $kJ/m^2$)
- thermoplastische Fließfähigkeit (MVR (220/10) bei 220°C und 10 kg Belastung nach ISO 1133, Einheit: $cm^3/10$ min)
- Glanz bei 20° nach DIN 67530
- Yellowness Index nach ASTM-Methode E313-96

Die Prüfergebnisse sind in der Tabelle 2 zusammengefasst. Mit den Prüfergebnissen wird ersichtlich, dass die Formmassen 2A bis 2E und 2I bis 2K vergleichbare mechanische und optische Eigenschaften besitzen. Die erfindungsgemäßen Formmassen 2A, 2C bis 2E sowie 2J und 2K lasen sich allerdings kostengünstiger herstellen, da die entsprechenden Pfropfcopolymere eine gute Entwässerbarkeit und eine niedrigere Restfeuchte nach Zentrifugation aufweisen.

Tabelle 2: Zusammensetzung und Prüfdaten der Formmassen 2A bis 2F

| Formmassen | | 2A | 2B | 2C | 2D | 2E | 2F |
|---|---|---|---|---|---|---|---|
| | | erfindungsgemäß | Vergleich | erfindungsgemäß | erfindungsgemäß | erfindungsgemäß | erfindungsgemäß |
| Zusammensetzung | | | | | | | |
| Pfropfcopolymer 1A | [Gew.-%] | 34,2 | - | - | - | - | - |
| Pfropfcopolymer 1B | [Gew.-%] | - | 34,2 | - | - | - | - |
| Pfropfcopolymer 1C | [Gew.-%] | - | - | 34,2 | - | - | - |
| Pfropfcopolymer 1D | [Gew.-%] | - | - | - | 34,2 | - | - |
| Pfropfcopolymer 1E | [Gew.-%] | - | - | - | - | 34,2 | - |
| Pfropfcopolymer 1F | [Gew.-%] | - | - | - | - | - | 34,2 |
| Copolymer A-IV | [Gew.-%] | 63,4 | 63,4 | 63,4 | 63,4 | 63,4 | 63,4 |
| Ethylenbisstearylamid | [Gew.-%] | 2,0 | 2,0 | 2,0 | 2,0 | 2,0 | 2,0 |
| Magnesiumstearat | [Gew.-%] | 0,3 | 0,3 | 0,3 | 0,3 | 0,3 | 0,3 |
| Polydimethylsiloxan | [Gew.-%] | 0,1 | 0,1 | 0,1 | 0,1 | 0,1 | 0,1 |
| Messergebnisse | | | | | | | |
| Kerbschlagzähigkeit bei Raumtemperatur (ak RT) | [kJ/m$^2$] | 21,2 | 21,0 | 21,3 | 21,1 | 21,0 | 21,1 |
| Kerbschlagzähigkeit bei -20°C (ak -20°C) | [kJ/m$^2$] | 15,3 | 15,2 | 15,3 | 15,2 | 15,2 | 15,2 |
| MVR (220/10) | [cm$^3$/10min] | 31,1 | 29,3 | 29,5 | 30,9 | 32,0 | 30,6 |

Messergebnisse (fortgesetzt)

| | | | | | | |
|---|---|---|---|---|---|---|
| Glanz bei 20° | 88,9 | 88,4 | 88,3 | 88,7 | 89,1 | 88,7 |
| Yellowness Index | 33,5 | 33,7 | 33,9 | 33,5 | 33,5 | 33,6 |

Tabelle 2 Fortsetzung: Zusammensetzung und Prüfdaten der Formmassen 2I bis 2K

| Formmassen | | 2I | 2J | 2K |
|---|---|---|---|---|
| | | nicht erfindungsgemäß | erfindungsgemäß | erfindungsgemäß |
| Zusammensetzung | | | | |
| Pfropfcopolymer 1I | [Gew.-%] | 27,3 | - | - |
| Pfropfcopolymer 1J | [Gew.-%] | - | 27,3 | - |
| Pfropfcopolymer 1K | [Gew.-%] | - | - | 27,3 |
| Copolymer A-IV | [Gew.-%] | 70,3 | 70,3 | 70,3 |
| Ethylenbisstearylamid | [Gew.-%] | 2,0 | 2,0 | 2,0 |
| Magnesiumstearat | [Gew.-%] | 0,3 | 0,3 | 0,3 |
| Polydimethylsiloxan | [Gew.-%] | 0,1 | 0,1 | 0,1 |
| Messergebnisse | | | | |
| Kerbschlagzähigkeit bei Raumtemperatur (ak RT) | [kJ/m$^2$] | 21,4 | 21,3 | 21,4 |
| Kerbschlagzähigkeit bei -20°C (ak -20°C) | [kJ/m$^2$] | 15,9 | 15,8 | 15,8 |
| MVR (220/10) | [cm$^3$/10 min] | 34,8 | 35,0 | 34,8 |
| Glanz bei 20° | | 94,2 | 94,5 | 94,2 |
| Yellowness Index | | 38,5 | 38,2 | 39,0 |

2.4 Thermoplastische Formmassen 2L und 2M

Die getrockneten Pfropfcopolymere B aus den Beispielen 1L und 1M und das thermoplastisches Copolymer A-IV wurden in Anteilen gemäß Tabelle 3 zusammen mit 43 Gew.-Teilen linearem Polycarbonat K2; 0,75 Gew.-Teilen Pentaerythrittetrastearat; 0,12 Gew.-Teilen Irganox B900; 0,10 Gew.-Teilen Irganox 1076 und 0,02 Gew.-Teilen Citronensäure auf einem Extruder ZSK 25 (Hersteller Coperion) bei 260°C vermischt und nach Granulierung zu Formkörpern verarbeitet. Es wurden die Formmassen 2L und 2M und daraus hergestellte Formkörper erhalten. Die Gestalt der Formkörper entsprechen den Vorgaben der jeweiligen Prüfung.

Folgende Eigenschaften der Formmassen bzw. der Formkörper wurden ermittelt:

- Kerbschlagzähigkeit bei Raumtemperatur (ak RT) und bei -20°C (ak -20°C) nach ISO 180/1A (Einheit: kJ/m$^2$)
- thermoplastische Fließfähigkeit (MVR (260/5) bei 260°C und 5 kg Belastung nach ISO 1133, Einheit: cm$^3$/10 min)
- Vicat-Erweichungstemperatur B/120 nach DIN EN ISO 306
- Kugeldruckhärte(Hc) [N/mm$^2$] EN ISO 2039-1 (Testgewicht 358 N, Dauer 30 s),
- Verarbeitungsstabilität: Als Maß für die Verarbeitungsstabilität der hergestellten Formmassen dient die Änderung (in Prozent) des MVR gemessen nach ISO 1133 bei 260°C für nicht flammgeschützte Polycarbonat/ABS-Zusammensetzungen mit einer Stempellast von 5 kg bei einer 15-minütigen Verweilzeit der Schmelze unter Luftausschluss bei einer Temperatur von 300°C. Die resultierende Größe ΔMVR(proc.) berechnet sich durch die

Formel:  ΔMVR(proc.) =

[( MVR nach Schmelzelagerung - MVR vor Lagerung ) / MVR vor Lagerung]*100 %

Die Prüfergebnisse sind in der Tabelle 3 zusammengefasst.

Die Formmassen 2L und 2M weisen vergleichbare mechanische Eigenschaften auf. Allerdings kann die erfindungsgemäße Formmassen 2L aufgrund der besseren Entwässerbarkeit und der niedrigeren Restfeuchte des Pfropfcopolymers 1L nach Zentrifugation kostengünstiger hergestellt werden.

Tabelle 3: Zusammensetzung und Prüfdaten der Formmassen 2L und 2M

| Formmassen | | 2L | 2M |
|---|---|---|---|
| | | Erfindung | Vergleich |
| Zusammensetzung | | | |
| Pfropfcopolymer 1L | [Gew.-Teile] | 25,25 | - |
| Pfropfcopolymer 1M | [Gew.-Teile] | - | 25,25 |
| Copolymer A-IV | [Gew.-Teile] | 31,19 | 31,19 |
| Lineares Polycarbonat K2 | [Gew.-Teile] | 42,58 | 42,58 |
| Pentaerythrittetrastearat | [Gew.-Teile] | 0,74 | 0,74 |
| Irganox B900 | [Gew.-Teile] | 0,12 | 0,12 |
| Irganox 1076 | [Gew.-Teile] | 0,10 | 0,10 |
| Citronensäure | [Gew.-Teile] | 0,02 | 0,02 |
| Messergebnisse | | | |
| Kerbschlagzähigkeit bei Raumtemperatur (ak RT) | [kJ/m$^2$] | 43,1 | 43,1 |
| Kerbschlagzähigkeit bei - 20°C (ak -30°C) | [kJ/m$^2$] | 40,1 | 40,1 |
| MVR (260/10) | [cm$^3$/10 min] | 9,0 | 15,0 |
| Vicat B/120 | [°C] | 107,4 | 107,2 |
| Kugeldruckhärte (Hc) | [N/mm$^2$] | 91,7 | 94,0 |
| $\Delta$MVR(proc.) | [%] | 165 | 283 |

## Patentansprüche

1.  Verfahren zur Herstellung einer Pfropfcopolymer-Zusammensetzung enthaltend:

    B: 90 bis 100 Gew.-% mindestens eines Pfropfcopolymers B, enthaltend:

    B1: 40 bis 85 Gew.-%, bezogen auf das Pfropfcopolymer B, mindestens einer Pfropfgrundlage B1, welche erhalten wird durch Emulsionspolymerisation von:

    B11: 50 bis 100 Gew.-%, bezogen auf die Pfropfgrundlage B1, Butadien,
    B12: 0 bis 50 Gew.-%, bezogen auf die Pfropfgrundlage B1, mindestens eines weiteren Monomers B12 ausgewählt aus Styrol, $\alpha$-Methylstyrol, Acrylnitril, Methacrylnitril, Isopren, Chloropren, $C_1$-$C_4$-Alkylstyrol, $C_1$-$C_a$-Alkyl(meth)acrylat, Alkylenglykoldi(meth)acrylat und Divinylbenzol;

    wobei die Summe B11 + B12 gerade 100 Gew.-% ergibt; und
    B2: 15 bis 60 Gew.-%, bezogen auf das Pfropfcopolymer B, einer Pfropfhülle B2, welche erhalten wird durch Emulsionspolymerisation in Gegenwart der mindestens einen Pfropfgrundlage B1 von:

    B21 50 bis 95 Gew.-%, bezogen auf die Pfropfhülle B2, eines Monomers B21, ausgewählt aus Styrol oder Mischungen von Styrol und mindestens einem weiteren Monomer ausgewählt aus $\alpha$-Methylstyrol, p-Methylstyrol und (Meth)acrylsäure-$C_1$-$C_8$-alkylester;
    B22 5 bis 50 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Anhydriden ungesättigter Carbonsäuren und Imiden ungesättigter Carbonsäuren;

    wobei die Gesamtsumme aus Pfropfgrundlage B1 und Pfropfhülle B2 gerade 100 Gew.-% ergibt; und
    K1: 0 bis 10 Gew.-% mindestens einer weiteren Komponente K1,
    umfassend die Schritte:

a) Herstellung des Pfropfcopolymers B umfassend die Emulsionspolymerisation der Pfropfhülle B2 in Gegenwart der mindestens einen Pfropfgrundlage B1, wobei das Pfropfcopolymer B in Form eines Latex L erhalten wird;

b) Fällen des Latex L des mindestens einen Pfropfcopolymers B nach der Emulsionspolymerisation durch Zugabe mindestens einer Fällungslösung F, enthaltend mindestens ein Salz und/oder mindestens eine Säure, wobei ein Teil des Latex L1 und eine Fällungslösung F1 in einem ersten Behälter H1 bei einer Temperatur $T_1$ im Bereich von 30 bis 80 °C vermischt werden, und die Mischung aus Latex L1 und Fällungslösung F1 in mindestens zwei weitere Behältern H2 und H3 mit Temperaturen $T_2$ und $T_3$ im Bereich von 60 bis 130 °C geführt wird, wobei optional weitere Teile des Latex L2 und/oder L3 und optional weitere Fällungslösungen F2 und/oder F3 zugegeben werden,

> wobei das Volumen $V_1$ des ersten Behälters H1 kleiner oder gleich 30 % des Volumens $V_2$ des zweiten Behälters H2 ist;
> wobei das Vermischen des Latex L1 und der Fällungslösung F1 im ersten Behälter H1 durch den Fluss der beiden Ströme L1 und F1 erfolgt, und wobei der erste Behälter H1 ein Strömungsrohr darstellt;

c) mechanisches Entwässern des gefällten Pfropfcopolymers B aus Schritt b), wobei ein abgetrenntes Serum S und ein Pfropfcopolymer B erhalten werden, wobei das Pfropfcopolymer B eine Restfeuchte von kleiner oder gleich 25 Gew.-% aufweist;

d) optional Trocknen des entwässerten Pfropfcopolymers B aus Schritt c).

2. Verfahren gemäß Anspruch 1, **dadurch gekennzeichnet, dass** das Verfahren den Schritt umfasst:
d) Trocknen des entwässerten Pfropfcopolymers B aus Schritt c), wobei ein Pfropfcopolymer-Pulver erhalten wird, das eine Restfeuchte von kleiner oder gleich 5 Gew.-% aufweist.

3. Verfahren gemäß einem der Ansprüche 1 oder 2, **dadurch gekennzeichnet, dass** das Volumen $V_1$ des ersten Behälters H1 0,1 bis 10% des Volumens $V_2$ des zweiten Behälters H2 beträgt.

4. Verfahren gemäß einem der Ansprüche 1 bis 3, **dadurch gekennzeichnet, dass** die Temperatur $T_2$ in Behälter H2 um mindestens 10 °C höher ist als die Temperatur $T_1$ in Behälter H1.

5. Verfahren gemäß einem der Ansprüche 1 bis 4, **dadurch gekennzeichnet, dass** die Temperatur $T_2$ in Behälter H2 um mindestens 10 °C geringer ist als die Temperatur $T_3$ in Behälter H3.

6. Verfahren gemäß einem der Ansprüche 1 bis 5, **dadurch gekennzeichnet, dass** die die Temperatur $T_1$ in Behälter H1 im Bereich von 40 bis 60 °C liegt, die Temperatur $T_2$ in Behälter H2 im Bereich von 61 bis 84 °C liegt und die Temperatur $T_3$ in Behälter H3 im Bereich von 85 bis 100 °C liegt.

7. Verfahren gemäß einem der Ansprüche 1 bis 6, **dadurch gekennzeichnet, dass** die Fällungslösung F mindestens ein Salz ausgewählt aus Magnesiumsulfat, Calciumchlorid, und Natriumchlorid und/oder mindestens eine anorganische Säure enthält.

8. Verfahren gemäß einem der Ansprüche 1 bis 7, **dadurch gekennzeichnet, dass** die Fällungslösung F einen Teil $S_R$ des in Schritt c) abgetrennten Serums S enthält.

9. Verfahren gemäß einem der Ansprüche 1 bis 8, **dadurch gekennzeichnet, dass** die mittlere Verweilzeit $t_1$ der Mischung aus Latex L und Fällungslösung F in Behälter H1 im Bereich von 1 bis 1.000 Sekunden liegt.

10. Verfahren gemäß einem der Ansprüche 1 bis 9, **dadurch gekennzeichnet, dass** die mittlere Verweilzeit der Mischung aus Latex L und Fällungslösung F in den Behältern H2 und H3 jeweils im Bereich von 5 bis 60 min liegt.

11. Verfahren gemäß einem der Ansprüche 1 bis 10, **dadurch gekennzeichnet, dass** das Pfropfcopolymer B eine Mischung aus mindestens zwei Pfropfcopolymeren B-I und B-II darstellt, wobei

Pfropfcopolymer B-I erhalten wird durch Emulsionspolymerisation einer Mischung der Monomere B21 und B22 in Gegenwart einer Pfropfgrundlage B1-A, welche einen mittleren Teilchendurchmesser $D_{50}$ im Bereich von 230 bis 330 nm aufweist, und einer Pfropfgrundlage B1-B, welche einen mittleren Teilchendurchmesser $D_{50}$ im Bereich von 340 bis 480 nm aufweist;

und Pfropfcopolymer B-II erhalten wird durch Emulsionspolymerisation einer Mischung der Monomere B21 und B22 in Gegenwart einer Pfropfgrundlage B1-C, welche einen mittleren Teilchendurchmesser $D_{50}$ im Bereich von 10 bis 220 nm aufweist;

wobei in Schritt b) die Mischung der Pfropfcopolymere B-I und B-II als Latex L eingesetzt wird und durch Zugabe der mindestens einer Fällungslösung F gefällt wird.

**12.** Verfahren zur Herstellung einer thermoplastischen Formmasse enthaltend:

A: 5 bis 95 Gew.-% mindestens eines thermoplastischen Copolymers A hergestellt aus:

A1: 50 bis 95 Gew.-%, bezogen auf das Copolymer A, mindestens eines Monomers A1, ausgewählt aus Styrol, $\alpha$-Methylstyrol, p-Methylstyrol und (Meth)acrylsäure-$C_1$-$C_8$-alkylester, und
A2: 5 bis 50 Gew.-%, bezogen auf das Copolymer A, mindestens eines Monomers A2, ausgewählt aus Acrylnitril, Methacrylnitril, Anhydriden ungesättigter Carbonsäuren und Imiden ungesättigter Carbonsäuren,

B: 5 bis 95 Gew.-% mindestens einer Pfropfcopolymer-Zusammensetzung hergestellt nach einem Verfahren der Ansprüche 1 bis 11, und
K2: 0 bis 90 Gew.-% mindestens einer weiteren Komponente K2,
umfassend die Schritte
a) bis c) und optional d) wie in einem der Ansprüche 1 bis 11 beschrieben sowie
e) Vermischen des mindestens einen thermoplastischen Copolymers A, des mindestens einen Pfropfcopolymer-Pulvers B und optional der mindestens einen weiteren Komponente K2.

**13.** Verfahren zur Herstellung einer thermoplastischen Formmasse gemäß Anspruch 12, **dadurch gekennzeichnet, dass** das thermoplastische Copolymer A hergestellt ist aus:

A1: 50 bis 95 Gew.-%, bezogen auf das Copolymer A, eines Monomers A1, ausgewählt aus Styrol, $\alpha$-Methylstyrol oder Mischungen von Styrol und mindestens einem weiteren Monomer ausgewählt aus $\alpha$-Methylstyrol, p-Methylstyrol und (Meth)acrylsäure-$C_1$-$C_8$-alkylester,
A2: 5 bis 50 Gew.-%, bezogen auf das Copolymer A, eines Monomers A2, ausgewählt aus Acrylnitril oder Mischungen von Acrylnitril und mindestens einem weiteren Monomer ausgewählt aus Methacrylnitril, Anhydriden ungesättigter Carbonsäuren und Imiden ungesättigter Carbonsäuren.

**14.** Verfahren zur Herstellung einer thermoplastischen Formmasse gemäß einem der Ansprüche 12 oder 13, **dadurch gekennzeichnet, dass** das Vermischen des thermoplastischen Copolymers A, der Pfropfcopolymer-Zusammensetzung und optional der weiteren Komponente(n) K2 in Schritt e) in einem Extruder bei einer Temperatur im Bereich von 200 bis 300 °C erfolgt.

**Claims**

**1.** Process for the production of a graft copolymer composition comprising:

B: from 90 to 100% by weight of at least one graft copolymer B comprising:

B1: from 40 to 85% by weight, based on the graft copolymer B, of at least one graft base B1 which is obtained via emulsion polymerization of:

B11: from 50 to 100% by weight, based on the graft base B1, of butadiene,
B12: from 0 to 50% by weight, based on the graft base B1, of at least one other monomer B12 selected from styrene, $\alpha$-methylstyrene, acrylonitrile, methacrylonitrile, isoprene, chloroprene, $C_1$-$C_4$-alkylstyrene, $C_1$-$C_8$-alkyl (meth)acrylate, alkylene glycol di(meth)acrylate and divinylbenzene;

where the entirety of B11 + B12 provides precisely 100% by weight; and
B2: from 15 to 60% by weight, based on the graft copolymer B, of a graft shell B2 which is obtained via emulsion polymerization, in the presence of the at least one graft base B1, of:

B21 from 50 to 95% by weight, based on the graft shell B2, of a monomer B21 selected from styrene and mixtures of styrene with at least one other monomer selected from $\alpha$-methylstyrene, p-methylstyrene and $C_1$-$C_8$-alkyl (meth) acrylate;

B22 from 5 to 50% by weight, based on the graft shell B2, of a monomer B22 selected from acrylonitrile and mixtures of acrylonitrile with at least one other monomer selected from methacrylonitrile, anhydrides of unsaturated carboxylic acids and imides of unsaturated carboxylic acids;

where the entirety of graft base B1 and graft shell B2 provides precisely 100% by weight; and

K1: from 0 to 10% by weight of at least one other component K1,

comprising the steps of:

a) production of the graft copolymer B comprising emulsion polymerization of the graft shell B2 in the presence of the at least one graft base B1, where the graft copolymer B is obtained in the form of a latex L;

b) precipitation of the latex L of the at least one graft copolymer B after emulsion polymerization via addition of at least one precipitation solution F comprising at least one salt and/or at least one acid, where a precipitation solution F1 and a portion of the latex L1 are mixed in a first container H1 at a temperature $T_1$ in the range from 30 to 80°C, and the mixture of latex L1 and precipitation solution F1 is passed into at least two further containers H2 and H3 with temperatures $T_2$ and $T_3$ in the range from 60 to 130°C, where optionally further portions of the latex L2 and/or L3 and optionally further precipitation solutions F2 and/or F3 are added,

where the volume $V_1$ of the first container H1 is less than or equal to 30% of the volume $V_2$ of the second container H2;

wherein the mixing of the latex L1 and the precipitation solution F1 takes place in the first container H1 by virtue of the flow of the two streams L1 and F1, and wherein the first container H1 is a flow tube;

c) mechanical dewatering of the precipitated graft copolymer B from step b), where an extracted serum S and a graft copolymer B are obtained, where the residual moisture content of the graft copolymer B is less than or equal to 25% by weight;

d) optionally drying of the dewatered graft copolymer B from step c).

2. Process according to Claim 1, **characterized in that** the process comprises the step of:
   d) drying of the dewatered graft copolymer B from step c), where a graft copolymer powder is obtained with residual moisture content less than or equal to 5% by weight.

3. Process according to either of Claims 1 and 2, **characterized in that** the volume $V_1$ of the first container H1 is from 0.1 to 10% of the volume $V_2$ of the second container H2.

4. Process according to any of Claims 1 to 3, **characterized in that** the temperature $T_2$ in container H2 is higher than the temperature $T_2$ in container H1 by at least 10°C.

5. Process according to any of Claims 1 to 4, **characterized in that** the temperature $T_2$ in container H2 is lower than the temperature $T_3$ in container H3 by at least 10°C.

6. Process according to any of Claims 1 to 5, **characterized in that** the temperature $T_2$ in container H1 is in the range from 40 to 60°C, the temperature $T_2$ in container H2 is in the range from 61 to 84°C and the temperature $T_3$ in container H3 is in the range from 85 to 100°C.

7. Process according to any of Claims 1 to 6, **characterized in that** the precipitation solution F comprises at least one salt selected from magnesium sulfate, calcium chloride and sodium chloride and/or at least one inorganic acid.

8. Process according to any of Claims 1 to 7, **characterized in that** the precipitation solution F comprises a portion $S_R$ of the serum S extracted in step c).

9. Process according to any of Claims 1 to 8, **characterized in that** the average residence time $t_1$ of the mixture of latex L and precipitation solution F in container H1 is in the range from 1 to 1000 seconds.

**10.** Process according to any of Claims 1 to 9, **characterized in that** the average residence time of the mixture of latex L and precipitation solution F in the containers H2 and H3 is respectively in the range from 5 to 60 min.

**11.** Process according to any of Claims 1 to 10, **characterized in that** the graft copolymer B is a mixture of at least two graft copolymers B-I and B-II, where

graft copolymer B-I is obtained via emulsion polymerization of a mixture of the monomers B21 and B22 in the presence of a graft base B1-A, the average particle diameter $D_{50}$ of which is in the range from 230 to 330 nm, and of a graft base B1-B, the average particle diameter $D_{50}$ of which is in the range from 340 to 480 nm; and graft copolymer B-II is obtained via emulsion polymerization of a mixture of the monomers B21 and B22 in the presence of a graft base B1-C, the average particle diameter $D_{50}$ of which is in the range from 10 to 220 nm;

where the mixture of the graft copolymers B-I and B-II is used in step b) as latex L and is precipitated via the addition of the at least one precipitation solution F.

**12.** Process for the production of a thermoplastic molding composition comprising:

A: from 5 to 95% by weight of at least one thermoplastic copolymer A produced from:

A1: from 50 to 95% by weight, based on the copolymer A, of at least one monomer A1 selected from styrene, $\alpha$-methylstyrene, p-methylstyrene and $C_1$-$C_8$-alkyl (meth)acrylate, and
A2: from 5 to 50% by weight, based on the copolymer A, of at least one monomer A2 selected from acrylonitrile, methacrylonitrile, anhydrides of unsaturated carboxylic acids and imides of unsaturated carboxylic acids,

B: from 5 to 95% by weight of at least one graft copolymer composition produced by a process of Claims 1 to 11, and
K2: from 0 to 90% by weight of at least one other component K2,
comprising the steps of

a) to c) and optionally d) as described in any of Claims 1 to 11, and also
e) mixing of the at least one thermoplastic copolymer A, the at least one graft copolymer powder B, and optionally the at least one other component K2.

**13.** Process for the production of a thermoplastic molding composition according to Claim 12, **characterized in that** the thermoplastic copolymer A is produced from:

A1: from 50 to 95% by weight, based on the copolymer A, of a monomer A1 selected from styrene, $\alpha$-methylstyrene and mixtures of styrene with at least one other monomer selected from $\alpha$-methylstyrene, p-methylstyrene and $C_1$-$C_8$-alkyl (meth)acrylate,
A2: from 5 to 50% by weight, based on the copolymer A, of a monomer A2 selected from acrylonitrile and mixtures of acrylonitrile with at least one other monomer selected from methacrylonitrile, anhydrides of unsaturated carboxylic acids and imides of unsaturated carboxylic acids .

**14.** Process for the production of a thermoplastic molding composition according to either of Claims 12 and 13, **characterized in that** the mixing of the thermoplastic copolymer A, the graft copolymer composition and optionally the other component(s) K2 in step e) takes place in an extruder at a temperature in the range from 200 to 300°C.

**Revendications**

**1.** Procédé pour la préparation d'une composition de copolymère greffé contenant :

B : 90 à 100 % en poids d'au moins un copolymère greffé B, contenant :

B1 : 40 à 85 % en poids, par rapport au copolymère greffé B, d'au moins une base de greffage B1, qui est obtenue par polymérisation en émulsion de :

B11 : 50 à 100 % en poids, par rapport à la base de greffage B1, de butadiène,
B12 : 0-50 % en poids, par rapport à la base de greffage B1, d'au moins un monomère supplémentaire B12 choisi parmi le styrène, l'$\alpha$-méthylstyrène, l'acrylonitrile, le méthacrylonitrile, l'isoprène, le chloro-prène, un $C_{1-4}$-alkylstyrène, un (méth)acrylate de $C_{1-8}$-alkyle, un di(méth)acrylate d'alkylèneglycol et un divinylbenzène ;

la somme B11 + B12 donnant exactement 100 % en poids ; et
B2 : 15 à 60 % en poids, par rapport au copolymère greffé B, d'une enveloppe de greffage B2, qui est obtenue par polymérisation en émulsion en présence de l'au moins une base de greffage B1 de :

B21 50 à 95 % en poids, par rapport à l'enveloppe de greffage B2, d'un monomère B21, choisi parmi le styrène et des mélanges de styrène et d'au moins un monomère supplémentaire choisi parmi l'$\alpha$-méthylstyrène, le p-méthylstyrène et des esters de $C_{1-8}$-alkyle d'acide (méth)acrylique ;
B22 5 à 50 % en poids, par rapport à l'enveloppe de greffage B2, d'un monomère B22, choisi parmi l'acrylonitrile et des mélanges d'acrylonitrile et d'au moins un monomère supplémentaire choisi parmi le méthacrylonitrile, des anhydrides d'acides carboxyliques insaturés et des imides d'acides carboxyliques insaturés ;

la somme totale de la base de greffage B1 et de l'enveloppe de greffage B2 donnant exactement 100 % en poids ; et
K1 : 0 à 10 % en poids d'au moins un composant supplémentaire K1,
comprenant les étapes de :

a) préparation d'un copolymère greffé B comprenant la polymérisation en émulsion de l'enveloppe de greffage B2 en présence de l'au moins une base de greffage B1, le copolymère greffé B étant obtenu sous forme d'un latex L ;
b) précipitation du latex L de l'au moins un copolymère greffé B après la polymérisation en émulsion par ajout d'au moins une solution de précipitation F, contenant au moins un sel et/ou au moins un acide, une partie du latex L1 et une solution de précipitation F1 étant mélangés à une température $T_1$ dans la plage de 30 à 80 °C dans un premier récipient H1, et le mélange du latex L1 et de la solution de précipitation F1 étant conduit dans au moins deux autres récipients H2 et H3 dotés de températures $T_2$ et $T_3$ dans la plage de 60 à 130 °C, éventuellement d'autres parties du latex L2 et/ou L3 et éventuellement d'autres solutions de précipitation F2 et/ou F3 étant ajoutées,

le volume $V_1$ du premier récipient H1 étant inférieur ou égal à 30 % du volume $V_2$ du deuxième récipient H2 ;
dans lequel le latex L1 et la solution de précipitation F1 sont mélangés dans le premier récipient H1 par l'écoulement des deux flux L1 et F1, et dans lequel le premier récipient H1 représente un tube d'écoulement ;

c) déshydratation mécanique du copolymère greffé B précipité de l'étape b), un sérum séparé S et un copolymère greffé B étant obtenus, le copolymère greffé B présentant une humidité résiduelle inférieure ou égale à 25 % en poids ;
d) éventuellement séchage du copolymère greffé déshydraté B de l'étape c).

2. Procédé selon la revendication 1, **caractérisé en ce que** le procédé comprenant l'étape de :
e) séchage du copolymère greffé déshydraté B de l'étape c), une poudre de copolymère greffé étant obtenue, qui présente une humidité résiduelle inférieure ou égale à 5 % en poids.

3. Procédé selon l'une quelconque des revendications 1 et 2, **caractérisé en ce que** le volume $V_1$ du premier récipient H1 est de 0,1 à 10 % du volume $V_2$ du deuxième récipient H2.

4. Procédé selon l'une quelconque des revendications 1 à 3, **caractérisé en ce que** la température $T_2$ dans le récipient H2 est au moins 10 °C plus élevée que la température $T_1$ dans le récipient H1.

5. Procédé selon l'une quelconque des revendications 1 à 4, **caractérisé en ce que** la température $T_2$ dans le récipient H2 est au moins 10 °C plus faible que la température $T_3$ dans le récipient H3.

**6.** Procédé selon l'une quelconque des revendications 1 à 5, **caractérisé en ce que** la température $T_1$ dans le récipient H1 se situe dans la plage de 40 à 60 °C, la température $T_2$ dans le récipient $H_2$ se situe dans la plage de 61 à 84 °C et la température $T_3$ dans le récipient H3 se situe dans la plage de 85 à 100 °C.

**7.** Procédé selon l'une quelconque des revendications 1 à 6, **caractérisé en ce que** la solution de précipitation F contient au moins un sel choisi parmi le sulfate de magnésium, le chlorure de calcium et le chlorure de sodium et/ou au moins un acide inorganique.

**8.** Procédé selon l'une quelconque des revendications 1 à 7, **caractérisé en ce que** la solution de précipitation F contient une partie $S_R$ du sérum S séparé dans l'étape c).

**9.** Procédé selon l'une quelconque des revendications 1 à 8, **caractérisé en ce que** le temps de séjour moyen $t_1$ du mélange du latex L et de la solution de précipitation F dans le récipient H1 se situe dans la plage de 1 à 1 000 secondes.

**10.** Procédé selon l'une quelconque des revendications 1 à 9, **caractérisé en ce que** le temps de séjour moyen du mélange du latex L et de la solution de précipitation F dans les récipients H2 et H3 se situe à chaque fois dans la plage de 5 à 60 minutes.

**11.** Procédé selon l'une quelconque des revendications 1 à 10, **caractérisé en ce que** le copolymère greffé B représente un mélange d'au moins deux copolymères greffés B-I et B-II,

le copolymère greffé B-I étant obtenu par polymérisation en émulsion d'un mélange des monomères B21 et B22 en présence d'une base de greffage B1-A, qui présente un diamètre moyen de particule $D_{50}$ dans la plage de 230 à 330 nm, et d'une base de greffage B1-B, qui présente un diamètre moyen de particule $D_{50}$ dans la plage de 340 à 480 nm ;
et le copolymère greffé B-II étant obtenu par polymérisation en émulsion d'un mélange des monomères B21 et B22 en présence d'une base de greffage B1-C, qui présente un diamètre moyen de particule $D_{50}$ dans la plage de 10 à 220 nm ;

dans lequel dans l'étape b), le mélange des copolymères greffés B-I et B-II est utilisé en tant que latex L et est précipité par ajout de l'au moins une solution de précipitation F.

**12.** Procédé pour la préparation d'une masse à mouler thermoplastique contenant :

A : 5 à 95 % en poids d'un copolymère thermoplastique A préparé à partir de :

A1 : 50 à 95 % en poids, par rapport au copolymère A, d'au moins un monomère A1, choisi parmi le styrène, l'$\alpha$-méthylstyrène, le p-méthylstyrène et des esters de $C_{1-8}$-alkyle d'acide (méth)acrylique, et
A2 : 5 à 50 % en poids, par rapport au copolymère A, d'au moins un monomère A2, choisi parmi l'acrylonitrile, le méthacrylonitrile, des anhydrides d'acides carboxyliques insaturés et des imides d'acides carboxyliques insaturés,

B : 5 à 95 % en poids d'au moins une composition de copolymère greffé préparée par un procédé des revendications 1 à 11, et
K2 : 0 à 90 % en poids d'au moins un composant supplémentaire K2,
comprenant les étapes

a) à c) et éventuellement d) comme décrit dans l'une quelconque des revendications 1 à 11 ainsi que
e) mélange de l'au moins un copolymère thermoplastique A, de l'au moins une poudre de copolymère greffé B et éventuellement de l'au moins un composant supplémentaire K2.

**13.** Procédé pour la préparation d'une masse à mouler thermoplastique selon la revendication 12, **caractérisé en ce que** le copolymère thermoplastique A est préparé à partir de :

A1 : 50 à 95 % en poids, par rapport au copolymère A, d'un monomère A1, choisi parmi le styrène, l'$\alpha$-méthyls-tyrène et des mélanges de styrène et d'au moins un monomère supplémentaire choisi parmi l'$\alpha$-méthylstyrène, le p-méthylstyrène et des esters de $C_{1-8}$-alkyle d'acide (méth) acrylique,
A2 : 5 à 50 % en poids, par rapport au copolymère A, d'un monomère A2, choisi parmi l'acrylonitrile et des mélanges d'acrylonitrile et d'au moins un monomère supplémentaire choisi parmi le méthacrylonitrile, des anhydrides d'acides carboxyliques insaturés et des imides d'acides carboxyliques insaturés.

14. Procédé pour la préparation d'une masse à mouler thermoplastique selon l'une quelconque des revendications 12 et 13, **caractérisé en ce que** le mélange du copolymère thermoplastique A, de la composition de copolymère greffé et éventuellement du ou des composants supplémentaire(s) K2 dans l'étape e) est réalisé dans une extrudeuse à une température dans la plage de 200 à 300 °C.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014170406 A
- WO 2014170407 A
- EP 0022200 A
- EP 0734825 A
- DE 656780 A
- DE 4015296 A
- US 8299175 B
- DE 102006044270 A
- DE 2909518 A
- DE OS3639904 A
- DE OS3913509 A
- WO 2012022710 A
- DE 102006044270 A1
- WO 2017093468 A
- DE 2420358 A
- DE 2724360 A
- DE 19713509 A
- DE 1495626 A
- DE 2232877 A
- DE 2703376 A
- DE 2714544 A
- DE 3000610 A
- DE 3832396 A
- DE 3077934 A
- DE 10008420 A
- EP 2606073 A
- EP 0768157 A1
- EP 0867463 A1
- WO 03099926 A1
- EP 2584001 A1
- WO 2008020012 A2

**In der Beschreibung aufgeführte Nicht-Patentliteratur**

- **W. SCHOLTAN ; H. LANGE.** *Kolloid Z. u. Z. Polymere,* 1972, vol. 250, 782-796
- Methoden der Organischen Chemie, Makromolekulare Stoffe. Thieme Verlag Stuttgart, 1961, vol. 1, 307
- **HOUBEN-WEYL.** Methoden der Organischen Chemie, Makromolekulare Stoffe. Thieme Verlag, 1961, vol. 1, 339
- **KRISCHER ; KRÖLL.** Trocknungstechnik, Zweiter Band, Trockner und Trocknungsverfahren. Verlag, 1959
- **K. KIRCHNER ; H. SCHLAPKOHL.** The Formation of Oligomers in the Thermal Copolymerisation of the Styrene/Acrylonitrile-System. *Makromol. Chem.,* 1976, vol. 177, 2031-2042